# EUROPEAN PATENT APPLICATION

(11) **EP 4 835 516 A1**
(43) Date of publication of application: **04.11.2026**
(21) Application number: 26175687.8
(22) Date of filing: 30.04.2026
(51) Int. Cl.: G01S 13/00, G01S 7/00, H04W 24/08, G01S 7/40, G01S 13/46, G01S 13/87

(54) **METHODS, ARCHITECTURES, APPARATUSES AND SYSTEMS FOR LINE OF SIGHT AND NON-LINE OF SIGHT STATUS DETERMINATION**

(30) Priority: 02.05.2025 US 202519197729
(71) Applicant: InterDigital Patent Holdings, Inc., Wilmington, DE 19809 (US)
(72) Inventor: KOIRALA, Remun, London, EC3A 3DH (GB); HASEGAWA, Fumihiro, Montreal, H3A 3G4 (CA); SHOJAEIFARD, Arman, London, EC3A 3DH (GB); MARINIER, Paul, Montreal, H3A 3G4 (CA); LEE, Moon IL, Melville, NY 11747 (US); PELLETIER, Ghyslain, Montreal, H3A 3G4 (CA)
(74) Representative: AWA Sweden AB

(57) **Abstract**

Procedures, methods, architectures, apparatuses, systems, devices, and computer program products are provided for determining and reporting a line of sight (LoS) status between a wireless transmit/receive unit (WTRU) and a sensing target (ST). The methods and systems include a WTRU receiving, from a wireless network, sensing configuration information. The methods and systems include receiving a reference signal associated with an ST. The methods and systems include performing one or more measurements based on the reference signal and the sensing configuration information. The methods and systems include determining an LoS between the ST and the WTRU based on the one or more measurements. The methods and systems include performing a sensing operation based on a sensing configuration selected based on the LoS status to generate one or more sensing values. The methods and systems include reporting the one or more sensing values and the LoS status to the wireless network.

## Description

### CROSS-REFERENCE TO RELATED APPLICATION(S)

The present application claims priority to and the benefit of U.S. Non-provisional Application No. 19/197,729, filed in the U.S. Patent and Trademark Office on May 2, 2025, which is hereby incorporated by reference in its entirety.

### TECHNICAL FIELD

The present disclosure is generally directed to the fields of communications, software and encoding/decoding, including, for example, to methods, architectures, apparatuses, and systems related to determining a line of sight status between two entities.

### BACKGROUND

Communicative links exist between a device (e.g., a wireless transmit/receive unit), a base station (e.g., a gNodeB), and a sensing target (e.g., a vehicle) during a sensing task. Whether or not a line of sight exists in such communication links may affect the quality of sensing measurements.

### SUMMARY

The accuracy of a sensing measurement may be affected by propagation path geometry. For example, if there exists a line of sight (LoS) between a wireless transmit/receive unit (WTRU) and a target object for which the WTRU is configured to perform sensing measurements, the sensing measurements determined by the WTRU may be more accurate than if compared to there being no LoS (i.e., non-line of sight (NLoS)) between the WTRU and the target object. If there exists an LoS between the WTRU and the target object, then it may be suitable for the WTRU to perform sensing on the target. Otherwise, it may be suitable for the WTRU to perform a different task. Accordingly, systems and methods are desired for determining whether there is an LoS between a WTRU and a target object.

In accordance with certain representative embodiments of the present disclosure, methods and systems are provided for operating a WTRU. The methods include a WTRU receiving, from a wireless network, sensing configuration information. The methods also include receiving, from the wireless network, a reference signal associated with a sensing target. The methods further include performing one or more measurements based on the reference signal and based on the sensing configuration information. The methods additionally include determining, based on the one or more measurements, an LoS between the sensing target and the WTRU. The methods moreover include performing a sensing operation based on a sensing configuration to generate one or more sensing values, where the sensing configuration is selected based on the LoS status. The methods furthermore include reporting, to the wireless network, the one or more sensing values and the LoS status.

In certain representative embodiments, the LoS status includes a first LoS status and the methods further include determining a second LoS status between the sensing target and a transmit/receive point (TRP) where if the first LoS status indicates an LoS between the WTRU and the sensing target and if the second LoS status indicates an LoS between the TRP and the sensing target, then the WTRU is configured to operate under a bistatic sensing mode. If the first LoS status indicates an LoS between the WTRU and the sensing target and if the second LoS status indicates no LoS between the TRP and the sensing target, the WTRU is configured to operate under a monostatic sensing mode.

In certain representative embodiments, the one or more sensing values include any one or more of the following: a reference signal received power, a reference signal received power per path, a delay, a relative delay, an angle of arrival, a doppler shift, a delay spread, a reference signal time difference, a receive-transmit time difference with respect to the WTRU, a reference signal carrier phase, a reference signal carrier phase difference, a radar cross section, a micro-doppler measurement, or a channel impulse response.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a diagram illustrating information flow between a WTRU and a wireless network in connection with performing a sensing procedure, in accordance with certain embodiments;
FIG. 3A depicts an example of a system including a WTRU for path measurement, a first target object, a second target object, and a TRP, in accordance with certain embodiments;
FIG. 3B is a chart of reference signal received power per path versus relative delay for various paths shown in FIG. 3A, in accordance with certain embodiments;
FIG. 3C is an illustrative chart of reference signal received power per path versus angle of arrival for various paths shown in FIG. 3A, in accordance with certain embodiments;
FIG. 4 is a diagram illustrating how a WTRU may be configured to determine an LoS-NLoS status based on an expected relative delay measurement, in accordance with certain embodiments;
FIG. 5 is a diagram illustrating how a WTRU determines whether an environmental object has similar characteristics to that of a target object, in accordance with certain embodiments;
FIG. 6 is a diagram illustrating how a WTRU may switch from a TRP-WTRU bistatic sensing mode to a WTRU monostatic sensing mode, in accordance with certain embodiments;
FIG. 7 is a diagram illustrating how a WTRU activates a particular sensing configuration, in accordance with certain embodiments; and
FIG. 8 is a flowchart of an illustrative method performed by a WTRU for determining a sensing configuration based on an LoS status, in accordance with certain embodiments.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, or any suitable combination thereof and/or any element thereof carries out an operation, process, algorithm, function, or any suitable combination thereof, and/or any portion thereof, it is to be understood that any embodiments described and/or claimed herein assume that any apparatus, system, device, or any suitable combination thereof and/or any element thereof is configured to carry out any operation, process, algorithm, function, or any suitable combination thereof and/or any portion thereof.

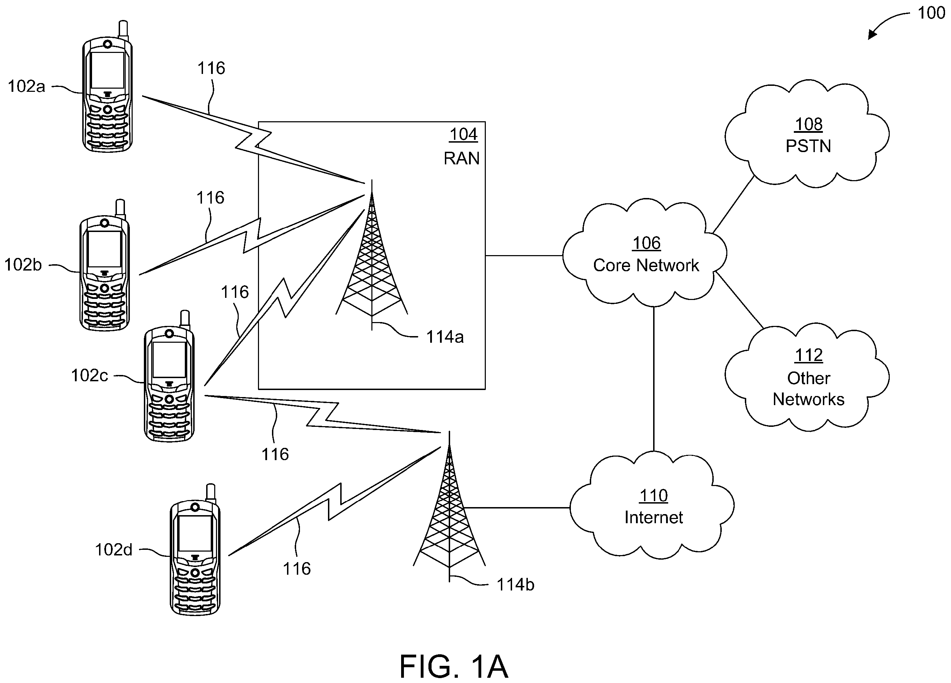

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, or any suitable combination thereof, to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNB, a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

It will be understood that a wireless network may include any suitable components and devices, including, for example, any of one or more base stations, one or more TRPs, one or more gNBs, one or more WTRUs, any network functions, one or more RANs, one or more application functions, one or more access and mobility management functions (AMFs), any other suitable device or component, or any combination thereof. It will be further understood that a component or device that is part of the wireless network can be referred to as communicating with the wireless network when it is communicating with any one or more other components or devices of the wireless network. For example, reference to a WTRU, which is part of the wireless network, transmitting or receiving signals to or from the wireless network refers to the WTRU transmitting or receiving signals, respectively, to or from any other component or device (e.g., another WTRU) of the wireless network.

The base station 114a may be part of the RAN 104/113, which may also include other base stations and/or network elements (not shown), such as a base station controller (BSC), a radio network controller (RNC), relay nodes, or any suitable combination thereof. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, or any suitable combination thereof). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, or any suitable combination thereof) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, or any suitable combination thereof, and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

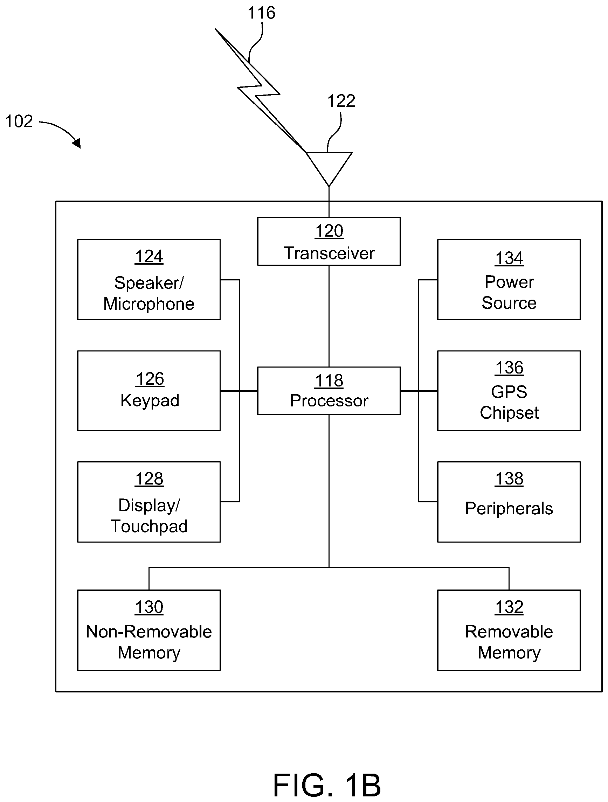

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), or any suitable combination thereof), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

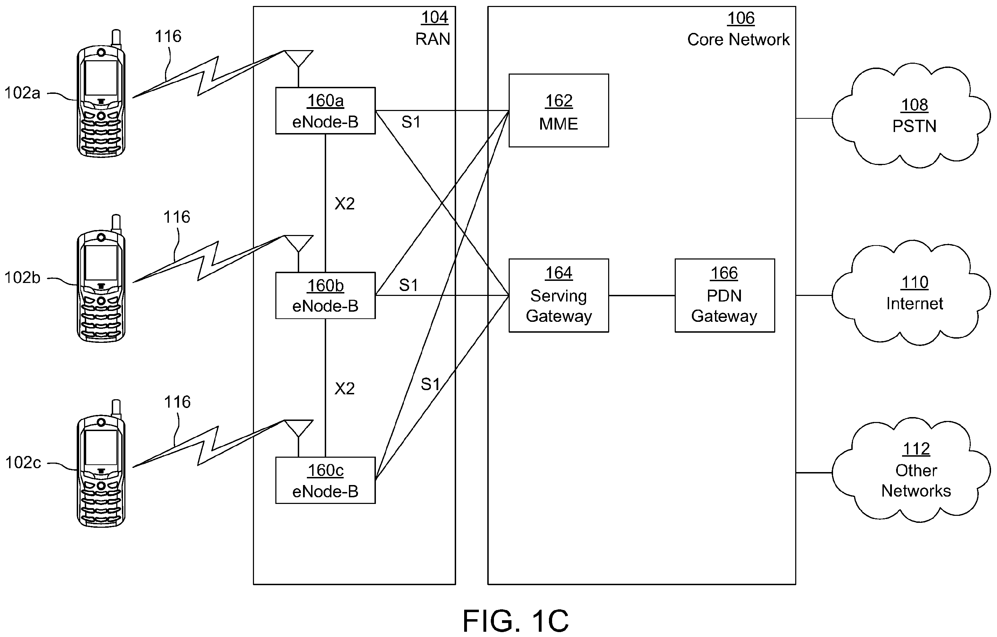

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, or any suitable combination thereof.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.1 1ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

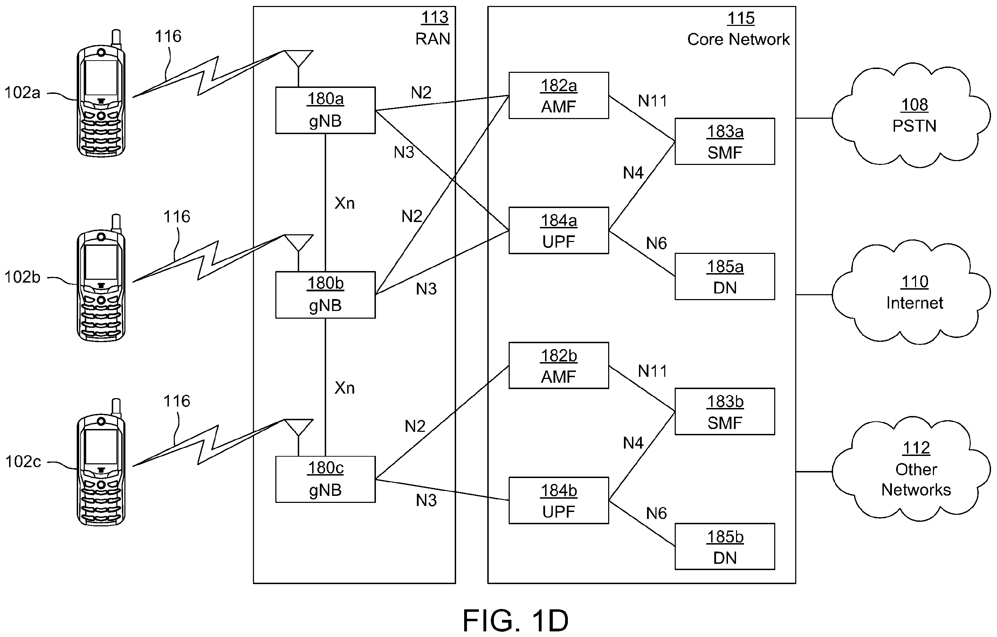

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, orthogonal frequency division multiplexing (OFDM) symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards AMFs 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

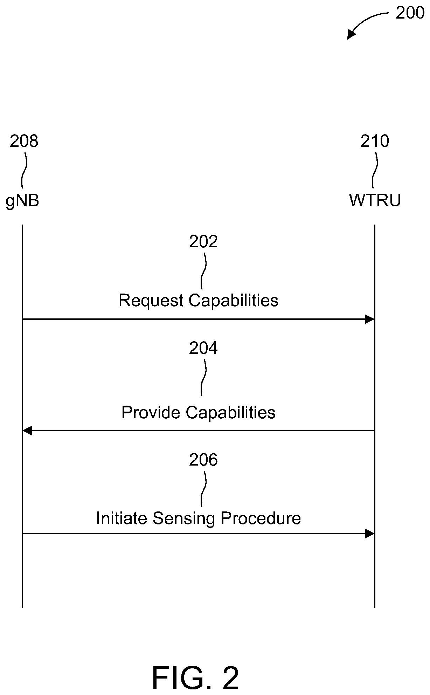

In certain embodiments of the present disclosure, including those described below at least in connection with FIGS. 2-8, the devices, systems, architectures, communication links, apparatuses, and other elements depicted in FIGs. 1A-1D may be used in connection with sensing availability evaluation of sensing entities.

Sensing may refer to actions involving detecting, estimating, or monitoring conditions of the environment and/or objects within the environment (e.g., determining any one or more of an object's shape, size, orientation, speed, location, distances or relative motion between objects) using RF signals. There may be several potential enhancements to the 5G systems or different sensing modes and key performance indicators (KPIs) related to sensing in the context of Integrated Sensing and Communications (ISAC). Different sensing modes, including monostatic and bistatic sensing, were defined depending on the transmitter and receiver location. Monostatic sensing refers to architectures including a co-located transmitter and receiver. Bistatic sensing refers to architectures including a non-co-located transmitter and receiver. Likewise, multi-static sensing refers to a bistatic sensing mode with multiple transmitters and/or receivers.

There may be different underlying sensing infrastructures. For example, sensing can be network based, user equipment (UE) assisted, or UE based. These infrastructures may differ in regard to the role each node undertakes. A node may be a TRP, UE, core network node such as an SMF or LMF, or other higher layer entities such as an application. Sensing information may refer to measurement(s), location information of the target object(s), or velocity information of the target object(s).

In some implementations, the accuracy of sensing (e.g., positioning or tracking a sensing target) depends on the right characterization of the sensing measurements (e.g., timing, phase, angle) with the propagation path geometry. For example, the accuracy of sensing target (ST) detection or localization may depend on determining how clear the propagation path between the sensing transmitter (also referred to as a sensing Tx), ST, and sensing receiver (also referred to as a sensing Rx) is. Hence, certain measurements may correspond to line-of-sight (LoS) or non-line-of-sight (NLoS) indications.

In some implementations, there may be no distinct functionalities or support dedicated to sensing. In some implementations, there may be various defined features for NR positioning including DL/UL reference signals, architectures, or protocols. Sensing features can be developed based on the NR positioning features.

It may be desirable to determine how a WTRU may determine the sensing environment associated with a particular ST.

In accordance with certain representative embodiments of the present disclosure, methods and systems are provided for allowing a WTRU to determine a sensing LoS-NLoS status of a ST-WTRU link based on certain measurements and for allowing the WTRU to report a sensing configuration that is optimal with respect to the LoS-NLoS status.

A WTRU may be configured to receive, from a wireless network, one or more downlink-positioning reference signal (DL-PRS) configurations. Each DL-PRS may be associated with a sensing mode, measurement and reporting configuration, for example, to determine the sensing LoS-NLoS status in the WTRU to ST link.

The WTRU may receive assistance information from the wireless network. For example, the assistance information may include a LoS-NLoS status between a TRP and the ST, expected LoS path measurements (e.g., reference signal receives power per path (RSRPP), doppler shift, or a relative delay with respect to a LoS path), or certain threshold information.

The WTRU may perform path measurements associated with the sensing target (e.g., RSRPP, relative delay, angle of arrival (AoA), or doppler shift).

The WTRU may determine a sensing LoS-NLoS status for an ST-WTRU link based on at least one of whether at least one path measurement exceeds a threshold or whether the difference between at least one path measurement and the expected path measurement exceeds a threshold.

The WTRU may determine the preferred sensing configuration based on the determined sensing LoS-NLoS status. If the ST-WTRU path is within the LoS, the WTRU may determine to activate a first DL-PRS configuration associated with a bistatic sensing mode if the TRP-ST path is within the LoS. The WTRU may activate a monostatic sensing mode if the TRP-ST path is NLoS. The WTRU may determine to activate a first configuration with a first number of samples per measurement if ST-WTRU path is within the LoS and a second configuration otherwise. The WTRU may determine to activate a first configuration with periodic reporting if the ST-WTRU path is NLoS. Otherwise, the WTRU may activate a second configuration with trigger-based reporting.

The WTRU may report at least one of the following: the sensing LoS-NLoS status of the ST-WTRU path, measurements associated with the ST, or sensing configuration information. The sensing LoS-NLoS status may include the status associated with one of the configured DL-RSs (e.g., whether the path along the DL-RS includes the target) and/or the status associated with one of the configured TRPs (e.g., whether the ST exists along the WTRU-TRP path).

Such methods and systems provide a way for the WTRU to distinguish the properties of a link, channel, or path between two or more sensing entities. A sensing entity may be a TRP, WTRU, ST, or environmental object (EO). Such methods and systems further provide a way for the WTRU to accurately characterize measurements with the nature of the path or link between the entities. Such methods and systems further provide a way for the WTRU or a wireless network to determine the optimal sensing configuration in order to accurately detect, localize or track a given ST.

In this disclosure, certain terms may be used interchangeably with one another.

A TRP, as the term is used herein, may refer to a gNB, positioning reference unit (PRU), sensing transmitter, UE, or WTRU. The term TRP may be used to indicate an entity (e.g., RAN entity) capable of transmitting a reference signal (e.g., DL-PRS, single sideband modulation (SSB), or channel state information reference signal (CSI-RS)).

A WTRU, as the term is used herein, may refer to a sensing receiver or UE. A WTRU may be used to indicate an entity (e.g., RAN entity) capable of receiving and measuring a reference signal (e.g., DL-PRS, SSB, or CSI-RS).

A network, as the term is used herein, may refer to an AMF, location management function (LMF), gNB, NG-RAN, or any other one or more entities involved in at least one sensing functionality (e.g., an SMF). An LMF is a non-limiting example of a node or entity (e.g., network node or entity) that may be used for or to support positioning and/or sensing. Any other node or entity (e.g., a server WTRU, SMF) may be substituted for an LMF and still be consistent with this disclosure. A network may also refer to a wireless network.

A DL-PRS, as the term is used herein, may refer to positioning or reference signals such as a DL-RS, sounding reference signal for positioning (SRSp), CSI-RS, demodulation reference signal (DM-RS), or SSB. A DL-PRS may refer to a downlink positioning reference signal or any other reference signal that may be received and/or measured by the WTRU such as an SSB or CSI-RS.

An SRSp, as the term is used herein, may refer to any of an uplink positioning or other reference signal that may be transmitted by the WTRU such as a sounding reference signal (SRS).

A location, as the term is used herein, may refer to a position. A location (e.g., WTRU location, TRP location, or target location) may be expressed in terms of altitude, latitude, geographic coordinates, or local coordinates.

An ID, as the term is used herein, may refer to an index. For example, reference to a DL-PRS ID may refer to a DL-PRS index.

A path, as the term is used herein, may refer to any suitable direct path, indirect path (e.g., a multi-path), any other suitable route between two points, or any suitable combination thereof.

In certain representative embodiments, a WTRU may receive any one or more of the following: configurations (e.g., DL-RS configurations, measurement configurations, or reporting configurations), indications/requests (e.g., power indications, beam indications, configurations, activations, deactivations, or switching commands), or configured thresholds from the network (e.g., LMF, gNB) via a downlink physical channel or via lower or higher level layer signalling. A downlink physical channel may include a physical downlink shared channel (PDSCH) or physical downlink control channel (PDCCH). Lower or higher layer signalling may include downlink control information (DCI), a MAC-control element (MAC-CE), radio resource control (RRC) or an LTE positioning protocol (LPP) message.

In certain representative embodiments, a WTRU may send the measurement report (e.g., containing the measurements) and/or indications (e.g., requests) to the network (e.g., LMF, gNB) via a semi-static (e.g., LPP, RRC) or dynamic message (e.g., UCI, MAC-CE) or via an uplink channel. An uplink channel may be a physical uplink control channel (PUCCH) or physical uplink shared channel (PUSCH).

In certain representative embodiments, dependency of a first parameter on a second parameter may be interpreted as a first parameter with a first value if the second parameter is above a configured threshold and a second value otherwise.

Measurements, as the term is used herein, may refer to any one or more of the following: reference signal received power (RSRP), RSRPP, delay, relative delay, AoA, doppler shift, delay spread, doppler spread, a reference signal time difference (RSTD), a WTRU receive-transmit time difference, a reference signal carrier phase (RSCP) measurement (e.g., per path), a reference signal phase difference (RSCPD) measurement (e.g., per path), radar cross section (RCS), a micro-doppler measurement, a path delay profile, a channel impulse response (CIR), or any other suitable measurement (e.g., associated with positioning or sensing). Measurements may be performed on one or more RSs. Measurements may be associated with one or more paths or resources. Measurements may be associated with one or more TRPs or WTRUs.

A sensing target, as the term is used herein, may refer to at least one of an EO, scattering point, or any element in the channel that may cause a multipath reflection. A sensing target may also be referred to as a target, target object, or sensing target object. In this disclosure, the methods and systems defined for a sensing target may be equivalently valid for an EO, scattering point, or any element in the channel causing multipath reflections.

Time duration units may be in terms of at least one of the following: seconds, number of slots, number of symbols, number of frames, or number of sub-frames.

Time index units may be in terms of at least one of the following: absolute time in terms of, for example, a symbol index, slot index, frame index, or subframe index; or a relative time in terms of, for example, a number of symbols, number of slots, number of frames, or number of subframes with respect to a reference time. Angle units may be in terms of degrees or radians. Distance units may be in terms of meters. Frequency range units may be in terms of at least one of the following: hertz (Hz), number of resource elements (REs), number of resource blocks (RBs), bandwidth part (BWP), or power frequency location (PFL).

DL-PRS, as the term is used herein, may refer to any of the terms DL-RS, measurement configuration, or reporting configuration.

DL-PRS resources, as the term is used herein, may refer to any following terms: associated DL-PRS resource ID, DL-PRS beam ID, DL-PRS resource ID, DL-PRS resource set ID, DL-RS ID, DL-RS resource set ID, TRP ID, cell ID, Sidelink (SL)-PRS ID, SL-PRS resource ID, or SL-PRS resource set ID.

An area (e.g., indicated area or sensing service area), as the term is used herein, may refer to a region and may be in terms of at least one of a course location, zone ID, or any other representation of a geographical area (e.g., a set of points such as a convex hull around a point), a location representing the center of a shape (e.g., a rectangle and associated parameters), cell area, sector, or coverage area. A coarse location may be defined by an ellipsoid point (e.g., defined by latitude degree, longitude degree or latitude sign) or a geographical location (e.g., a 2D location or 3D location). A coarse location may additionally include an uncertainty region (e.g., circle, sphere, ellipse, or ellipsoid). A zone ID may be defined in reference to a geographical reference (e.g., the coordinates (0, 0)) and may refer to a geographical area (e.g., a square area with a zone length called *L*) defined by a point and a length of the square. For example, for a given zone length *L* (e.g., configured by the network), the WTRU may be able to determine the area based on the ID and on a mathematical mapping equation or a table.

A sensing LoS-NLoS indicator, as the term is used herein, may refer to a certain and/or a soft indication (e.g., a likelihood or probability) of LoS-NLoS in at least one path, for example, between the sensing transmitter and the sensing target and/or the sensing target and the sensing receiver.

A sensing entity, as the term is used herein, may refer to at least one of the following: at least one sensing transmitter such as TRP or a WTRU, at least one sensing receiver such as a TRP or a WTRU, at least one sensing target, or at least one EO.

A time window (e.g., sensing time window) configuration may include at least one of a start time or end time in terms of time index units, periodicity, duration or time offset in terms of time duration units.

A DL-PRS may be configured in a certain manner. In certain representative embodiments, a PRS configuration may include any one or more of the following parameters: a number of symbols, a transmission power, a number of PRS resources included in the PRS resource set, a muting pattern for the PRS (e.g., the muting pattern may be expressed via a bitmap), a periodicity, a type of PRS (e.g., periodic, semi-persistent, or aperiodic), a slot offset for periodic transmission for the PRS, a vertical shift of the PRS pattern in the frequency domain, a time gap during repetition, a repetition factor, an RE offset, a comb pattern, a comb size, a spatial relation, quasi-colocation (QCL) information (e.g., QCL target or QCL source information) for the PRS, a number of PRUs, a number of TRPs, an absolute radio-frequency channel number (ARFCN), a subcarrier spacing, an expected RSTD, an uncertainty in expected RSTD, a start physical resource block (PRB), bandwidth information, a BWP ID, a number of frequency layers, a start or end time for the PRS transmission, an on/off indicator for the PRS, a TRP ID, a PRS ID, a cell ID, a global cell ID, a PRU ID, or an applicable time window. The WTRU may apply a PRS configuration under a condition such that the current time is within an applicable time window. The WTRU may receive a beam width of a PRS or boresight direction (e.g., as an angle of departure (AoD)) of the PRS from the network. The configuration described herein is not limited to a PRS; the configuration described can be applicable to any DL RS.

An SRSp may be configured in a certain manner. In certain representative embodiments, SRSp or SRS configuration may include any one or more of the following: a resource ID; comb offset values; cyclic shift values; a start position in the frequency domain; a number of SRSp symbols; a shift in the frequency domain for the SRSp; a frequency hopping pattern; a type of SRSp (e.g., aperiodic, semi-persistent or periodic); a sequence ID used to generate an SRSp or other IDs used to generate an SRSp sequence; spatial relation information indicating which reference signal (e.g., DL RS, UL RS, CSI-RS, SRS, or DM-RS) or SSB (e.g., SSB ID or cell ID of the SSB) the SRSp is related to spatially such that the SRSp and DL RS may be aligned spatially; QCL information (e.g., a QCL relationship between an SRSp and other reference signals or SSB); QCL type information; a resource set ID; a list of SRSp resources in the resource set; transmission power related information; bandwidth (e.g., expressed in terms of MHz or number of RBs); frequency information (e.g., center frequency, ARFCN, frequency layer ID, or component carrier ID); pathloss reference information which may include an index for an SSB, CSI-RS or PRS; a periodicity of SRSp transmission; or spatial information such as spatial direction information of the SRSp transmission (e.g., beam information or angles of transmission) or spatial direction information of the DL RS reception (e.g., a beam ID used to receive DL RS or angle of arrival).

There may be an association between certain configurations and sensing modes. A sensing mode indication may include particular contents. In certain representative embodiments, a WTRU may be configured with at least one sensing mode such that the sensing mode may be associated with at least one configuration (e.g., a DL-PRS configuration, an SRSp configuration, a measurement configuration, or a reporting configuration). The WTRU may receive at least one of the following as part of a sensing mode indication: information for at least one sensing transmitter (e.g., TRP or WTRU); information for at least one sensing receiver (e.g., TRP or WTRU); or information for at least one indication of monostatic sensing, bistatic sensing, and/or multi-static sensing.

In certain representative embodiments, a WTRU may be configured with a monostatic sensing mode where the sensing transmitter and receiver may refer to the same entity (e.g., the same WTRU or TRP). The WTRU may be configured with a bistatic mode where a first sensing entity (e.g., a TRP or WTRU) is a sensing transmitter and a second sensing entity (e.g., a TRP or WTRU) is a sensing receiver. The WTRU may be configured with a multi-static mode such that one or more sensing entities (e.g., TRP or WTRU) are the sensing transmitters and such that one or more second sensing entities (e.g., TRP or WRU) are the sensing transmitters. For example, the WTRU may be configured with at least one of the following sensing modes: monastic WTRU; monostatic TRP; bistatic or multistatic TRP to WTRU (e.g., downlink); bistatic or multistatic WTRU to TRP (e.g., uplink); bistatic or multistatic TRP to TRP; or bistatic or multistatic WTRU to WTRU (e.g., downlink or uplink).

In certain representative embodiments, a WTRU may be configured with more than one configuration such that each configuration may either be a downlink configuration (e.g., DL-PRS configuration, measurement configuration, and/or reporting configuration) or an uplink configuration (e.g., SRSp configuration). The WTRU may receive, from a wireless network, an indication that the configuration is associated with a particular sensing mode. At least one downlink configuration may be associated with a sensing mode such that the WTRU is a sensing receiver. At least one uplink configuration may be associated with a sensing mode such that the WTRU is a sensing transmitter. For example, a downlink configuration may be associated with at least one of the following sensing modes: bistatic TRP to WTRU and/or bistatic or multistatic TRP; a second WTRU to the WTRU and/or bistatic or multistatic TRP; or monostatic TRP. For example, an uplink configuration may be associated with at least one of the following sensing modes such that the WTRU may at least transmit (and in case of monostatic mode, additionally receive and/or report) the reference signal for sensing: monostatic WTRU; the WTRU to a second WTRU and/or a bistatic TRP and/or a multistatic TRP; or a WTRU to a bistatic or multistatic TRP.

In certain representative embodiments, a WTRU may receive an indication from the wireless network or report a sensing mode to the wireless network dynamically (e.g., DCI or MAC-CE) or semi-statically (e.g., RRC).

In certain representative embodiments, a WTRU may receive an indication or report the sensing mode in terms of a numerical value (e.g., 0, 1, or 2) or a categorical value (e.g., A or B) such that each value may be mapped to and associated with at least one sensing mode. In certain representative embodiments, a WTRU may be configured with at least one indication of the transmitting and/or receiving sensing entity (e.g., TRP ID, WTRU ID such as a cell-radio network temporary identifier (C-RNTI)) indicating the sensing mode. The WTRU may report the sensing entity to the network to report the sensing mode.

In certain representative embodiments, a WTRU may be configured to determine and/or report the sensing mode. The sensing mode may be associated with a configuration. The WTRU may determine that a configuration is associated with an uplink sensing mode where the WTRU is a sensing transmitter, for example, if the WTRU is configured with only an uplink transmission configuration (e.g., SRSp configuration). The WTRU may determine that a configuration is associated with a downlink sensing mode, for example, if the WTRU is configured with only a downlink transmission configuration (e.g., for measurement and/or reporting such as a DL-PRS configuration). The WTRU may determine that a sensing mode is a monostatic sensing mode if the WTRU has full duplexing capabilities and is configured with at least one downlink configuration and at least one uplink configuration. For example, the resources (e.g., time, frequency, or spatial resources) for downlink and uplink transmission and reception for monostatic configuration may be the same.

In certain representative embodiments, a WTRU may determine the sensing mode from the configuration based on the resource type. For example, the WTRU may determine that a sensing mode corresponds to a TRP based downlink sensing mode (e.g., TRP to WTRU bistatic or multi-static mode, TRP to TRP bistatic or multi-static mode, or TRP monostatic mode) if the configured resource for downlink measurement and/or reporting is a TRP based downlink reference signal (e.g., DL-PRS). The WTRU may determine that a sensing mode corresponds to a WTRU based sensing mode (e.g., WTRU to TRP bistatic or multi-static mode or WTRU monostatic mode) if the configured uplink resource is an uplink reference signal (e.g., SRSp). The WTRU may determine that a sensing mode is a WTRU to WTRU sensing mode (e.g., WTRU to WTRU bistatic mode) if the configured resources are specific to WTRU to WTRU sensing modes (e.g., WTRU to WTRU reference signals such as SL reference signals such as an SL-PRS).

In certain representative embodiments, a WTRU may be configured to implicitly report the sensing mode (e.g., preferred sensing mode, active sensing mode, or sensing mode to which the WTRU determines it will switch to). The WTRU may be configured to report to switch to an uplink, downlink, or sidelink based sensing mode by selecting associated resources.

In this disclosure, a sensing target may refer to any object (e.g., human, unmanned aerial vehicle (UAV), or ground vehicles) in the environment that at least one sensing entity (such as a sensing transmitter, sensing receiver, and/or network entity) may be interested in sensing. For example, in a smart home intruder detection scenario, the WTRU may be interested in sensing (e.g., detecting, tracking) a human intruder. As such, the WTRU may consider a human as a sensing target.

In this disclosure, an EO may refer to any object in the environment that at least one sensing entity (e.g., a sensing transmitter, a sensing receiver, and/or a network) may not be primarily configured to detect. For example, in a smart home intruder detection scenario, the WTRU may not be primarily configured to detect a furniture piece in the room. As such, the WTRU may consider the furniture piece an EO. The EO may be characterized by properties (e.g., size, material, velocity) similar to the sensing target, and such an EO may be referred to as EO type 1. The EO may be characterized by properties different compared to the sensing target, and such an EO may be referred to as EO type 2. The type of EO may depend on the sensing target. For example, for a UAV sensing target, a bird may be considered as an EO type 1 and a building may be considered as EO type 2 (e.g., due to the similarities or differences in their properties). A sensing target in one scenario may be considered an EO in another scenario. As such, in this disclosure, the systems and methods defined for detection of a sensing target may interchangeably refer to the systems and methods for detection of an EO and vice versa.

In this disclosure sensing clutter may refer to sensing noise present due to noise or interference in the environment.

A sensing LoS-NLoS status indicator (also referred to as any one of a sensing LoS-NLoS indicator, LoS-NLoS indicator, LoS-NLoS status, or LoS status) may refer to an indicator that indicates the event, probability, or likelihood of at least one path, multipath, or channel between at least two sensing entities (e.g., sensing transmitter, a sensing receiver, or a sensing target) being in line-of-sight or non-line-of-sight. The sensing LoS-NLoS indicator between more than two nodes may be defined as the likelihood of LoS or NLoS as a function (e.g., AND function, OR function, multiplication, or normalization) of a sensing LoS-NLoS indicator between at least one pair of entities.

In certain representative embodiments, a WTRU may receive, determine, or report a sensing LoS-NLoS status indicator with at least one of the following: at least one measurement; at least one path; at least one DL-PRS resource; at least one DL-PRS resource set; at least one DL-PRS beam; at least one TRP; at least one cell; at least one frequency resource (e.g., PFL, BWP, RBs, REs, sub-carrier, carrier, or band); at least one sensing entity (e.g., sensing transmitter, sensing target, or sensing receiver); at least one sensing time window; at least one validity duration; at least one sensing mode; at least one area (e.g., sensing service area); or location or height of at least one sensing entity.

In certain representative embodiments, a WTRU may receive, determine, and/or report the associated information to the network with the sensing LoS-NLoS indicator. For example, the WTRU may receive, determine, and/or report the sensing LoS-NLoS status indicator associated with at least one sensing receiver and at least one sensing target. The WTRU may be indicated with or may be configured to determine and/or report the likelihood an LoS path existing between the sensing target and the sensing receiver link. The WTRU may associate the indicator to the sensing entities.

In certain representative embodiments, a WTRU may receive, determine, and/or report the sensing LoS-NLoS status indicator associated with at least one of the DL-PRS resource, frequency resource, cell, and/or TRP. The WTRU may be indicated with or configured to determine and/or report the likelihood of the LoS path existing between at least two sensing entities based on measurements, processing, and/or assistance information associated with at least one of the DL-PRS resource, frequency resource, cell, and/or the TRP.

In certain representative embodiments, a WTRU may receive, determine, and/or report the sensing LoS-NLoS status indicator associated with a sensing time window. The WTRU may be indicated with or configured to determine and/or report the likelihood of the LoS path existing between at least two sensing entities based on measurements, processing, and/or assistance information within the indicated time window.

In certain representative embodiments, a WTRU may receive a validity duration (e.g., at least one parameter associated with a time window configuration) indicating a duration where the sensing LoS-NLoS status may be valid.

In certain representative embodiments, a WTRU may receive, from the network, the LoS-NLoS status between a first location and a second location. The first and second location may correspond to TRP location and location of the ST.

In certain representative embodiments, a WTRU may receive more than one LoS-NLoS status associated with a TRP or DL-RS indicating that the network detected more than one STs from a TRP or along DL-RS.

In certain representative embodiments, a WTRU may receive a sensing LoS-NLoS status for an area. The WTRU may determine, based on its distance and/or TRP location, an LoS or NLoS status in the area. For example, a TRP may be located on the rooftop of a tall building and the building may be the only tall EO in the area. As such, an LoS can be determined between any objects on the ground and TRP in the area.

In certain representative embodiments, the LoS-NLoS status indicator may be represented in a particular manner. In certain representative embodiments, the sensing LoS-NLoS status indicator may be represented (e.g., determined or reported) categorically or numerically. The indicator may be reported as a soft indicator or a hard indicator. A soft indicator may represent a continuous space. A hard indicator (also referred to as a certain indicator) may represent a discrete space. The sensing LoS-NLoS status indicator may be represented in terms of at least one of the following forms: a hard indicator categorical form such as "LoS," "NLoS," "low," "medium," or "high;" a hard indicator numerical form such as binary values (e.g., 0 or 1) or integer values (e.g., 0, 1, or 2); or a soft indicator numerical value such as a representation of probability (e.g., a number between 0 and 1), a representation of likelihood, or a percentage value. Certain forms may have corresponding representations in other forms. For example, a "high" indicator may correspond to a probability value of 1 or a percentage value of 95%. A "high" may correspond to a probability value of 0.1.

In certain representative embodiments, a WTRU may receive, from the network, an LoS-NLoS status (e.g., hard or soft LoS or NLoS indicator) between a TRP and ST. The WTRU may receive information related to the TRP (e.g., TRP location or TRP ID). The WTRU may receive the LoS-NLoS status associated with a DL-RS.

In certain representative embodiments, a WTRU may be configured to determine and/or report the sensing LoS-NLoS status as a soft indicator. The range of values in the soft indicator may indicate the confidence with which the WTRU may determine and/or report the channel between at least two sensing entities. If the WTRU determines the LoS-NLoS status indicator with high confidence, then the WTRU may determine and/or report a value close to a lower or upper range of the indicator. The WTRU may determine and/or report a middle range otherwise.

In certain representative embodiments, the LoS-NLoS indicator may be generalized. For example, the WTRU may be configured to determine the sensing LoS-NLoS status indicator as a measure of the quality of the sensing link or the channel between at least two or more sensing entities. The sensing LoS-NLoS status indicator may also indicate the confidence or reliability of sensing measurements. As such, the WTRU may determine the accuracy or uncertainty associated a sensing measurement or value.

The systems and methods described in this disclosure may be applicable to any of the following: any suitable sensing indicators measuring or determining the quality of the sensing link or sensing channel; any confidence, reliability, accuracy, and/or uncertainty indicator associated with any reference signal for sensing; any suitable at least one sensing entity, sensing results (e.g., sensing measurement, location of target, tracking a target, or any suitable combination thereof), TRP, cell, time window, frequency resource, or sensing mode.

In certain representative embodiments, a WTRU may be configured by the wireless network to include the capability for sensing LoS-NLoS status determination. For example, the WTRU may be configured by the wireless network to report capability information for sensing (e.g., determination of sensing LoS-NLoS status indication) including any one or more of the following aspects: a capability to perform, process, and/or report (e.g., to the network) measurements (e.g., per path sensing measurements); a capability to perform measurements and/or determine its location, velocity, or orientation; the maximum or minimum number of paths and/or sensing targets the WTRU may be able to perform measurements on, process, or report (e.g., simultaneously) to the network; the maximum or minimum granularity of measurement and/or reporting (e.g., in terms of time duration units) capability; a capability to determine and/or report the sensing LoS-NLoS indication; a capability to determine sensing target characteristics and/or EO characteristics such as a target type, target material properties, location, or velocity based on measurements; or a capability to determine sensing target characteristics and/or EO characteristics such as target type, target material properties, location, or velocity based on measurements; or a capability to support at least one or more sensing modes (e.g., WTRU monostatic, WTRU-WTRU bistatic, or TRP to WTRU bistatic).

In certain representative embodiments, a WTRU may receive the configuration for sensing LoS-NLoS indication determination from the wireless network after reporting the capability information. The capability information may act as the request (e.g., implicit) to the wireless network to provide or activate the sensing configuration, as illustrated in FIG. 2.

FIG. 2 is a diagram illustrating information flow between a WTRU and a wireless network in connection with performing a sensing procedure, in accordance with certain embodiments. At 202, WTRU 210 (which may correspond to any of WTRUs 102a-102d) receives a capabilities request from gNB 208 (which may correspond to any of gNBs 180a-180c). At 204, WTRU 210 provides its capabilities to gNB 208. At 206, WTRU 210 receives an instruction from gNB 208 to initiate a sensing procedure.

In certain representative embodiments, a WTRU may be configured to perform path measurements which may correspond to measurements corresponding to multipath reflections. A path may refer to at least one or a group of measured multipath components. A path measurement may include any one or more of the following: one or more power per path measurements (e.g., RSRPP or RCS); one or more angle per path (e.g., AoA or AoD) measurements; one or more time per path measurements (e.g., relative delay or time of arrival (ToA)); one or more phase per path measurements (e.g., carrier phase per path or carrier phase difference); or one or more frequency per path measurements (e.g., doppler shift or micro-doppler per path).

In certain representative embodiments, a WTRU may determine that a measured multipath is a suitable path based on at least one of the following conditions: at least one of the measurements (e.g., RSRPP or doppler shift) corresponding to the multipath component is above or below a configured threshold; at the one least of the statistics (e.g., variance) of at least one of the measurements corresponding to the multipath component is above or below a configured threshold; or a change in at least one of the measurements (e.g., between consecutive two measurement occasions or between resources) is above or below a configured threshold.

In certain representative embodiments, a WTRU may be configured by the network to determine a path ID for at least one or more of the measured or determined paths. The WTRU may receive a set of paths IDs from the wireless network and allocate the path IDs to the paths. The WTRU may be configured to allocate paths ID for a path based on at least one of the following: the order in which the WTRU receives the path (e.g., the first arrival path may be allocated a first path ID and the second arrival path may be allocated a second path ID); or at least one of the measurements (e.g., relative delay) associated with the path.

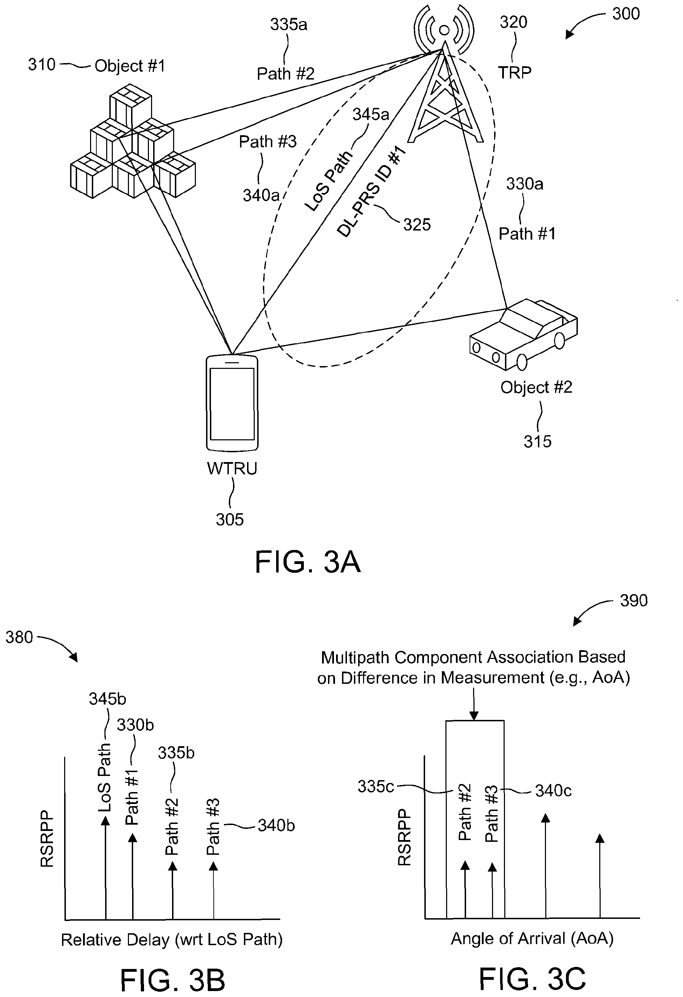

FIG. 3A depicts an example of a system including a WTRU for path measurement, a first target object, a second target object, and a TRP, in accordance with certain embodiments. FIG. 3B is a chart of RSRPP versus relative delay for various paths shown in FIG. 3A, in accordance with certain embodiments. FIG. 3C is a chart of RSRPP versus AoA for various paths shown in FIG. 3A, in accordance with certain embodiments.

FIG. 3A depicts environment 300 including WTRU 305 (which may correspond to any of WTRUs 102a-102d or 210), object #1 310, object #2 315, and TRP 320. TRP 320 transmits DL-PRS ID #1 325. Path #1 330a extends between WTRU 305 and TRP 320 and is reflected by object #2 315. Path #2 335a extends between WTRU 305 and TRP 320 and is reflected by object #1 310. Path #3 340a also extends between WTRU 305 and TRP 320 and is reflected by object #1 310. LoS path 345a extends between WTRU 305 and TRP 320. FIG. 3B depicts chart 380 with RSRPP (on the y-axis) for each of Path #1 330b (corresponding with the Path #1 330a), Path #2 335b (corresponding with the Path #2 335a), Path #3 340b (corresponding with the Path #3 340a), and LoS Path 345b (corresponding with LoS Path 345a) versus relative delay (on the x-axis) with respect to LoS Path 245b. FIG. 3C depicts chart 390 with RSRPP (on the y-axis) for each of Path #1 330c (corresponding with the Path #1 330a; not labeled in FIG. 3C), Path #2 335c (corresponding with the Path #2 335a), Path #3 340c (corresponding with the Path #3 340a), and LoS Path 345c (corresponding with LoS Path 345a; not labeled in FIG. 3C) versus AoA (on the x-axis).

In certain representative embodiments, WTRU 305 may be configured to associate two path measurements (e.g., with a same object) if the difference between at least one measurement of a first path (e.g., AoA of path #2 335a and path #2 335c in FIG. 3C) and the corresponding measurement of a second path (e.g., AoA of path #3 340a in FIG. 3A and path #3 340c in FIG. 3C) is above or below a configured threshold. For example, two paths may be associated if WTRU 305 determines that both the paths are reflected from the same sensing target.

In certain representative embodiments, a WTRU may be configured to allocate an object ID to a set of associated paths. The object ID may be associated with at least one sensing target. The WTRU may receive a set of object IDs, and the WTRU may allocate to the object IDs to the path measurements.

In certain representative embodiments, a WTRU may be configured to identify the sensing path for determining the sensing LoS-NLoS status indicator from the wireless network. The WTRU may determine the path among the measured paths associated with the reference DL-PRS resource (e.g., reference DL-PRS beam), reference cell, and/or reference TRP.

In certain representative embodiments, a WTRU may be configured to determine the sensing LoS-NLoS indicator between a sensing target and the WTRU. The WTRU may be configured to determine at least one or more paths associated with a sensing target. The WTRU may determine two paths associated based on any one or more of the following: at least one measurement of a path exceeding a threshold; at least one measurement difference between the two paths exceeding a threshold; the uncertainty in at least one measurement of a path exceeding a threshold; or a statistic (e.g., variance) of a measurement related to a path exceeding a threshold.

A sensing path may refer to one or more paths indicated by the wireless network or determined by the WTRU for determination of an LoS-NLoS condition. In some embodiments, the paths may be associated with at least one sensing target.

In certain representative embodiments, a WTRU may be configured to report at least one of the following to the wireless network: at least one path ID; at least one object ID indicating an association between one or more paths; at least one path measurement (e.g., path measurement such as RSRPP, AoA, or doppler spread); at least one statistic (e.g., variance) associated with at least one measurement; at least one change in path measurement (e.g., difference between path measurements between measurement occasions or resources); at least one DL-PRS resource ID, DL-PRS resource set ID(s), and/or DL-PRS beam ID(s) (e.g., associated with the path measurement); at least one TRP ID or cell ID associated with the measurement; or measurement timestamp (e.g., in terms of time index units) associated with at least one measurement.

In certain representative embodiments, a WTRU may be configured to report a CIR measurement. A CIR, including N paths, may be defined by the following equation *h*(*t*) *=* ${\sum }_{k = 1}^{N} {h}_{k} \left(t\right) δ \left(t-{τ}_{k}\right)$ where *hₖ*(*t*) and *τₖ* are time-varying complex valued coefficients expressed by *a + bj* where $j = \sqrt{- 1}$ for the channel impulse response and delay, measured in seconds, for the *k^{th}* path, respectively. The delta function is defined as *δ*(*t*) = 1 for *t =* 0 and *δ*(*t*) = 0 for *t* ≠ 0. It may be assumed that the coefficients are constant over time (e.g., such that *hₖ*(*t*) = *hₖ*). The WTRU may report the amplitude of CIR *hₖ* and *τₖ* for each path *k* to the network. The WTRU may report the number of paths, N, to the wireless network. Alternatively, the WTRU may receive *hₖ* and *τₖ* for each path *k* from the wireless network and/or the number of paths.

In certain representative embodiments, a WTRU may obtain at least one CIR from the wireless network. The CIR may be associated with at least one of the following: at least one DL-PRS configuration such as DL-PRS resource IDs or a DL-PRS resource set ID; at least one frequency resource (e.g., PFL or BWP ID); at least one TRP ID; or at least one cell ID.

In certain representative embodiments, a WTRU may determine that the CIR represents the channel between an associated entity and the WTRU. A CIR may be represented and refer to a delay profile (DP) or power delay profile (PDP). A PDP may be defined as a set of delays and power profiles, such as [*τ*₀, *τ*₁, ··· , *τ*_{*N*-1}] and [*p*₀, *p*₁, ··· , *p*_{*N-*1}], where *pₖ* may corresponds to relative power at the *k^{th}* path compared to the first path. A delay profile may be defined as a set of delays [*τ*₀, *τ*₁, ··· , *τ*_{*N*-1}] which indicate path delay for each path above *p_{threshold}.* The WTRU may receive *p_{threshold}* from the network to derive a delay profile from a power delay profile.

In certain representative embodiments, a WTRU may receive an indication from the network on how to generate a CIR, PDP or DP based on timing, phase, and/or power measurements. The WTRU may send a request to the network to receive an indication on which methodologies to use to generate a CIR, PDP or DP based on the measurements the WTRU made. For example, the WTRU may receive a message from the network (e.g., via LPP, RRC, MAC-CE, or DCI) indicating the DL-RS resource indices and associated measurement types (e.g., RSTD or AoA) to use to generate a CIR, PDP or DP. The WTRU may receive an indication from the wireless network indicating to generate a CIR, PDP or DP.

In certain representative embodiments, a WTRU may receive a threshold (e.g., power threshold) from the wireless network, timing range (e.g., 0*µs* to 1*µs*), and timing granularity (e.g., every 0.1 *µs* in the indicated timing range or 100 sample points in the indicated timing range) for a CIR, PDP, and/or DP. The WTRU may determine to report power and timing (e.g., relative timing compared to a reference timing or absolute timing) information for any samples that have a received power over a threshold.

In certain representative embodiments, the CIR that the WTRU reports to the network may be defined by configured number of samples where the WTRU is configured with a granularity parameter for the samples (e.g., a given number of seconds apart). The number of samples may be defined within a window. The WTRU may report samples that have an RSRP over a configured threshold or a given number of samples with the highest RSRPs. The WTRU may indicate locations or sample indices of samples where the WTRU measures a given number of highest RSRP samples. The first sample may be defined as the earliest arriving path. The samples may be defined with respect to the reference timing (e.g., ToA of the reference DL-RS or ToA of the earliest arriving DL-RS). The WTRU may report timing, phase, and/or power information per sample. The determined reference timing or first path may be rounded up or down to the defined timing granularity. The CIR, PDP or DP may be defined as the impulse response between WTRU and TRP, associated with a DL-RS (e.g., DL-RS resource ID), or DL-RS resources (e.g., DL-RS resource IDs).

In certain representative embodiments, a WTRU may report the time of arrival of the DL-RS corresponding to the reflected signal. When the WTRU indicates (e.g., in a report sent to the wireless network) the ToA of the DL-RS corresponding to the reflected signal against the sensing target, the WTRU may indicate the relative timing with respect to the reference timing (e.g., a ToA of the reference RS). The WTRU may report, to the wireless network, the reference timing (e.g., based on the RS configured by the wireless network, a first sample within the window).

In certain representative embodiments, a WTRU may report AoA for certain samples. The WTRU may report AoA for samples whose RSRP is over the configured threshold. The WTRU may report AoA for a given number of samples such that each sample of the given number of samples have the greatest RSRP. For example, the WTRU may report the samples with the top 5 greatest RSRPs.

In certain representative embodiments, a WTRU may receive the relative delay information, from the wireless network, with respect to the reference timing. The relative delay information may be associated with a DL-RS indicated by the network. The relative timing information may correspond to the relative ToA of the reflected DL-RS against the target where relative ToA is defined with respect to the reference timing. The relative delay information sent from the wireless network may be used by the WTRU to estimate the location of the target. The relative delay information may be used by the WTRU to determine a ToA of an associated DL-RS. The relative delay information may be associated with an expected AoA (e.g., a reception angle from which the WTRU receives the DL-RS) or AoD (e.g., an angle of departure at which the DL-RS is transmitted).

In certain representative embodiments, the CIR may be used alternatively to path measurements if the CIR delay samples may interchangeably refer to relative delay or path delay measurements and the amplitude measurement of the CIR may interchangeably refer to any power measurement metric such as RSRPP or RSRP.

In certain representative embodiments, a WTRU may send measurements in a report to the wireless network (e.g., LMF, gNB) via a semi-static (e.g., LPP, RRC) or dynamic message (e.g., UCI or UL MAC-CE).

There may be various trigger conditions that cause the initiation of a procedure for sensing LoS-NLoS status determination.

In certain representative embodiments, a WTRU may be configured, by the wireless network, to determine and/or report a sensing LoS-NLoS status indicator. The WTRU may request the wireless network for configuration information for determining and/or reporting the sensing LoS-NLoS status indicator based on at least one of the conditions as described below.

A condition may be that the WTRU receives at least one indication (e.g., explicitly or implicitly) from the network for at least one sensing procedure (e.g., target detection, target tracking, or target localization). The indication may be at least one of the following: an explicit indication (e.g., via DCI or MAC-CE) to activate one or more configurations associated with the determination of a sensing LoS-NLoS indicator; configuration (e.g., DL-PRS, measurement, reporting, or SRSp) and/or assistance information associated with target detection; or an activation indication of a time window or any configuration associated with sensing LoS-NLoS indicator.

A condition may be that WTRU determines that at least one measurement (e.g., RSRP) associated with at least one DL-RS (e.g., SSB, CSI-RS, or DL-PRS) satisfies conditions for determination of a sensing LoS-NLoS indicator. Such conditions may include at least one of the following: at least one measurement is above or below a threshold; a difference between at least one measurement between two measurement occasions are above a threshold; at least one statistic associated with at least one of the measurements is above or below a threshold; or an uncertainty estimate associated with at least one measurement exceeding a threshold.

A condition may be that at least one WTRU-side information parameter is above or below a threshold. A WTRU-side information parameter may include any one or more of the following: WTRU location (e.g., coarse location or zone ID); change in WTRU location (e.g., between measurement occasions); WTRU orientation; change in WTRU orientation (e.g., if the WTRU rotates between measurement occasions); velocity of the WTRU; change in velocity of the WTRU; the error in location and/or velocity estimate of the WTRU; an LoS-NLoS indicator between a sensing transmitter (e.g., a TRP) and a sensing receiver (e.g., a WTRU); number of WTRU antenna elements; or beamforming capabilities of the WTRU.

A condition may be that at least one configuration parameter (e.g., a DL-RS configuration, measurement configuration, reporting configuration, or uplink configuration) is above or below a threshold. A configuration parameter may include any one or more of the following: sensing bandwidth (e.g., uplink or downlink); number of symbols in a time domain; DL-PRS beam properties (e.g., beam direction or beamwidth); density of a reference signal in terms of time and frequency (e.g., a comb configuration); a number of samples per measurements; a reporting periodicity; or reporting quantity (e.g., measurements, target location, or target velocity).

A condition may be that the WTRU receives at least one retransmission request (e.g., a hybrid automatic repeat request (HARQ) retransmission) from the network. The retransmission request may be for an uplink channel (e.g., PUCCH or PUSCH), or UL RS (e.g., SRSp).

A condition may be that the WTRU fails to decode at least one of the downlink channels (e.g., PDSCH or PDCCH) or DL-RS (e.g., DL-PRS) transmitted by the gNB or a transmitter.

A condition may be that at least one metric or the change of at least one metric associated with at least one DL-RS, UL-RS, downlink channel, or plink channel is above or below a threshold.

A condition may be if the WTRU determines that the WTRU is triggered to determine the sensing LoS-NLoS based on the determination that the sensing resolution (e.g., the time resolution or angle resolution) is below a threshold. The sensing resolution may be determined based on the sensing bandwidth or at least one measurement (e.g., RSRP or RSRPP).

A condition may be that the periodicity of reporting is above a threshold. The periodicity of reporting may provide the WTRU with a processing time for determining whether the sensing LoS-NLoS is to be reported to the network.

In certain representative embodiments, a WTRU may be configured to determine the sensing LoS-NLoS status based on at least one measurement. The WTRU may perform measurements specified by configuration resources. Measurements may include any one or more of the following: at least one power measurement (e.g., RSRP or RSRPP); at least one timing measurement (e.g., time difference of arrival (TDoA), ToA, or a relative delay with respect to a reference path such as an LoS path, direct path, or first arrival path); at least one angle measurement (e.g., AoA, or AoD); at least one phase measurement (e.g., RSCP, RSCPD, relative phase measurement with respect to a phase of a reference path); or at least one path measurement.

In certain representative embodiments, a WTRU may receive (e.g., based on a request sent to the wireless network) assistance information for a measurement-based LoS-NLoS status determination. For example, the WTRU may send a request to the wireless network for assistance information. The WTRU may ask for a LoS-NLoS status between a TRP and ST. The WTRU may include TRP IDs and/or DL-PRS resource IDs in the request. The WTRU may also include at least one WTRU side information (also referred to as a WTRU-related parameter) in the request. The WTRU may include the potential location or area the ST may be located at. The WTRU may include sensing modes or methods (e.g., gNB based monostatic sensing, gNB-gNB bistatic sensing, gNB-WTRU bistatic sensing).

In certain representative embodiments, a WTRU may be configured with at least one of the following types of assistance information from the network as further described below.

A type of assistance information may be a sensing LoS-NLoS status indication of the TRP to ST link. The WTRU may receive an indication of the sensing LoS-NLoS status between at least two entities (e.g., TRP and ST). The WTRU may receive a DL-PRS resource (e.g., a beam) associated with the sensing LoS-NLoS information, indicating the spatial relationship associated with the indication. The WTRU may receive a validity duration associated with the indicated sensing LoS-NLoS status between the TRP and the WTRU, for example, in terms of at least one time duration unit.

The WTRU may receive an indication of the method used by the wireless network to determine the sensing LoS/NLoS value. Examples of such indication may include any one or more of the following: a sensing method used for the determination, at least one measurement associated with the determination, or at least one type of information associated with sensing LoS-NLoS information such as a DL-PRS resource or validity duration.

The WTRU may be configured with a sensing LoS-NLoS determination window such that the WTRU may be requested to perform subsequent sensing operations. For example, the WTRU may be configured to assume the indicated sensing LoS-NLoS information is valid only within the indicated time window.

A type of assistance information may be sensing target information. For example, the WTRU may receive an indication of the sensing target. The WTRU may receive at least one of the following as assistance information associated with the sensing target: at least one sensing target ID (e.g., an identifier for a human, UAV, or automated guided vehicle (AGV)); a sensing target location (e.g., location coordinates or area); a sensing target velocity (e.g., in terms of meters per second); sensing target material property such as a material type (e.g., wood or metal), material characteristics (e.g., conductance or inductance), an RCS value, or micro-doppler characteristics; at least one associated references (e.g., reference DL RS resource ID, reference DL RS resource set ID, or reference path); at least one reference TRP ID and/or reference cell ID; or a timestamp (e.g., in terms of time units).

In certain representative embodiments, a WTRU may receive an association between at least one sensing target and at least one sensing LoS-NLoS status. For example, the WTRU may receive an indication that the sensing LoS-NLoS status for the TRP to ST link may be in LoS or NLoS.

In certain representative embodiments, a WTRU may receive at least one sensing target information aspect as an indication of the target based on which the WTRU may be configured to determine the LoS-NLoS status based on.

A type of assistance information may be an expected sensing measurement. In certain representative embodiments, a WTRU may receive at least one expected sensing measurement. An expected sensing measurement may include any one or more of the following: at least one sensing target ID; or at least one sensing target type; at least one expected sensing target measurement value; at least one expected ST measurement range (e.g., minimum or maximum) associated with the sensing target. An expected sensing target measurement value may include any one or more of the following: an expected sensing target path ID; an expected sensing timing measurement (e.g., relative delay, ToA, time of flight (ToF) such that the ToF may correspond to ToF between a sensing target and WTRU or TRP to sensing target or TRP to WTRU via sensing target); an expected sensing target amplitude (e.g., associated with the power delay profile or CIR of the target path); an expected sensing target power measurement (e.g., RSRPP or RSRP); an expected sensing target frequency measurement (e.g., doppler shift measurement, micro-doppler measurement); an expected sensing target carrier phase measurement (e.g., RSCP or RSCPD); an expected sensing target angle measurement (e.g., AoA or AoD); or an expected frequency and/or the associated amplitude in the micro-doppler profile.

In certain representative embodiments, a WTRU may receive an indication of a reference associated with at least one measurement. For example, the WTRU may receive an indication of any one or more of the following references: at least one reference DL RS resource (e.g., reference DL RS resource ID or reference DL RS resource set ID); at least one reference TRP ID and/or reference cell ID; at least one path measurement (e.g., direct path); at least one direction (e.g., north); or at least one indication of whether at least one sensing link (e.g., associated with the expected sensing measurement) is in LoS or NLoS.

In certain representative embodiments, a WTRU may receive an indication that the indicated expected measurement is based on assumption that at least one sensing link (e.g., between ST and WTRU or between TRP and ST) has either a LoS or NLoS.

A type of assistance information may be an expected statistic of a sensing measurement. In certain representative embodiments, a WTRU may be configured with at least one expected statistic of a sensing measurement including at least one of an expected n-th moment (e.g., mean, variance, spread) of at least one measurement, or an expected density, distribution, or associated parameters of at least one measurement.

In certain representative embodiments, a WTRU may be configured with an expected spread of measurements for one or more values of a sensing LoS-NLoS indicator. The WTRU may be configured with the expected statistics associated with at least one of the following: at least one measurement statistic associated with a multipath (e.g., density of measurements of different paths) per measured resource (e.g., time, frequency, and/or spatial resource); at least one measurement statistic associated over multiple measured resources (e.g., a probability density over more than one resource; or at least one DL-PRS resource, DL-PRS resource set, TRP and/or cell. A statistic of measurement may be an indication of variance of spread of path measurements per measurement resource. A statistic of measurement may be an indication of a distribution of at least one measurement over time resources or frequency resources.

In certain representative embodiments, a WTRU may receive an indication that the indicated expected statistic of measurements is based on the assumption that at least one sensing link (e.g., between ST and WTRU) is either LoS or NLoS.

A type of assistance information may be an expected difference between measurements. In certain representative embodiments, a WTRU may be configured with at least one expected difference between a first and a second measurement such that the first and/or the second measurement may be associated with at least one of the following: one or more path measurements, one or more non-path measurements, one or more DL-PRS resources, one or more cells, one or more measurement occasions/resources (e.g., time, frequency and/or spatial resource), or one or more sensing entities (e.g., TRPs or sensing targets). An example of an expected difference may be expected difference between measurements associated with more than one resources. For example, an expected difference may be an expected RSRP measurement difference over more than one measurement occasion. The WTRU may receive an indication that the expected difference between measurements is based on the assumption that at least one sensing link is either in LoS or NLoS.

Methods for performing a measurement-based sensing LoS-NLoS status determination are further described below.

In certain representative embodiments, a WTRU may be configured to determine the sensing LoS-NLoS indicator based on measurements. The WTRU may be configured a particular method of determination, and the method of determination may be based on any one or more of the following: at least one measurement, at least one difference of measurement, at least one measurement statistic, at least one configuration and/or aspect of assistance information received from the wireless network, or at least one WTRU side condition.

In certain representative embodiments, a WTRU may receive an indication of the method for determining a sensing LoS-NLoS indicator via a dynamic signaling (e.g., DCI or MAC-CE) or via higher layer signaling (e.g., RRC). The indication may an explicit indication of the method or an implicit indication. For example, an implicit indication may be a numerical indication mapped to a table of methods, and the indication may include a mapping to the determination method.

In certain representative embodiments, a WTRU may be configured to determine the sensing LoS-NLoS indicator based on any one or more of the following measurement aspects: at least one measurement, at least one expected measurement, at least one indicated expected measurement, at least one difference between measurements (e.g., between measurement instances, measured resources, or paths), an expected difference between measurements, an expected indicated difference between measurements, at least one statistic (e.g., variance, probability distribution or density) of the measurement, at least one expected statistic of measurement, at least one uncertainty value with respect to a measurement, at least one measured path (e.g., including a path not associated with the sensing target, a path associated with at least one EO, or a path associated with sensing clutter), or at least one channel measurement (e.g., coherence bandwidth, doppler spread, or delay spread).

In certain representative embodiments, a WTRU may be configured to determine a sensing LoS-NLoS indicator if at least one of the above-mentioned factors or if the difference between at least two of the above mentioned factors exceeds a threshold. Otherwise, the WTRU may be configured to determine another indicator or may be configured to perform any suitable task. The WTRU may determine a difference between the measurements only if at least one of the indicated associations and/or references between the measurements are the same.

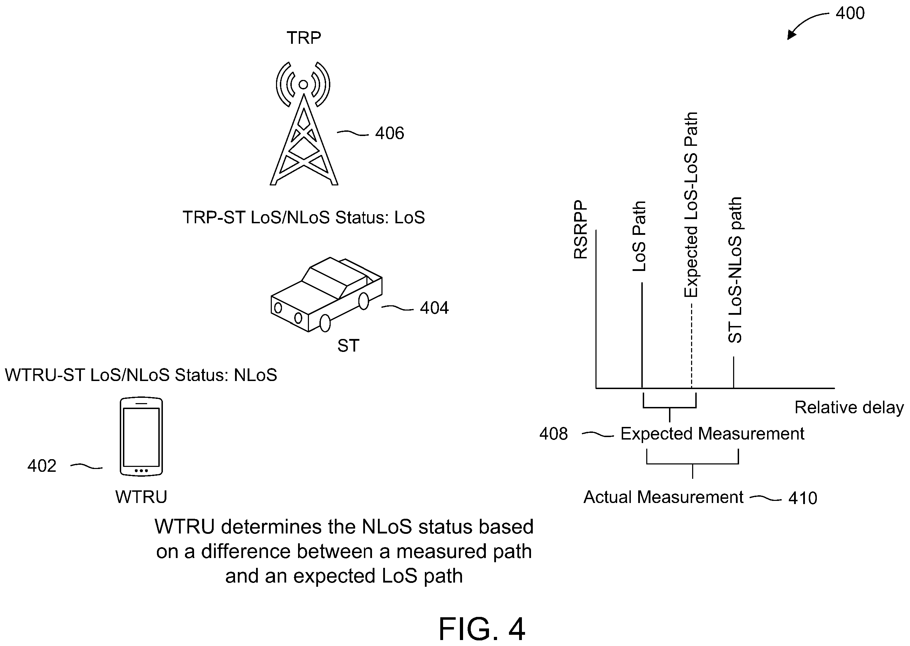

FIG. 4 is a diagram illustrating how a WTRU may be configured to determine an LoS-NLoS status based on an expected relative delay measurement, in accordance with certain embodiments;
In certain representative embodiments, WTRU 402 (which may correspond to any one of WTRUs 102a-102d, 210, or 305) may be configured to determine the sensing LoS-NLoS status indicator based on the difference between at least one measurement and at least one expected measurement indicated by the wireless network. For example, in diagram 400, WTRU 402 may be configured to determine the sensing LoS-NLoS status of the sensing channel based on the difference between the expected and measured relative delay. In diagram 400, actual measurement 410 and expected measurement 408 may be based on relative delay values. WTRU 402 may determine whether the absolute difference between actual measurement 410 and expected measurement 408 exceeds a threshold. Based on said determination, WTRU 402 may determine the appropriate LoS-NLoS status. WTRU 402 may further receive an indication that there is a LoS between TRP 406 (which may correspond to TRP 320) and ST 404 (which may correspond to objects 310 or 315) from the wireless network. In diagram 400, based on a difference between a measured path an expected path, WTRU 402 may determine that the absolute difference between expected measurement 408 and actual measurement 410 exceeds a threshold; hence, WTRU 402 may determine that there is a NLoS between WTRU 402 and ST 404.

In certain representative embodiments, a WTRU may be configured to determine the sensing LoS-NLoS status indicator based on an expected measurement statistic or aspect. For example, a measurement aspect may be a probability density associated with more than one path measurements such that each path measurement is associated with at least one sensing target. For example, the WTRU may perform RSRPP measurements for more than one path associated with a sensing target. The WTRU may be configured with an expected probability density of the RSRPP measurements for LoS and NLoS scenarios. The WTRU may determine whether the sensing target is in LoS if the difference between the distribution or measurements corresponding to the difference between the distributions (e.g., a difference between statistics of the distributions) is above or below a threshold. For example, if the difference between measurements of the actual and expected distributions exceeds a threshold, an NLoS may be determined. If the difference is below a threshold, a LoS may be determined. An example of the statistic may be parameters such as Rician K-factor that indicates the shape of a respective probability distribution.

In certain representative embodiments, a WTRU may receive an indication of an expected delay spread of a first given number of milliseconds (ms) associated with a sensing target under the assumption that there is a LoS between the ST and the WTRU. The WTRU may determine a that sensing target has associated delay spread of a second given number of milliseconds. The WTRU may determine that the sensing target and the WTRU link is in NLoS if the difference is above a threshold. Otherwise, the WTRU may determine that there is a LoS for said link.

In certain representative embodiments, a WTRU may be configured to determine the sensing LoS-NLoS status indicator based on the expected difference between at least a first and a second measurement. For example, the first and second measurements may each correspond to any one or more of the following: one or more path measurements, one or more non-path measurements, one or more DL-PRS resource values, one or more cell values, one or more measurement occasion values, or one or more sensing entity values. The WTRU may be configured determine the sensing LoS-NLoS status indicator if the difference between the first and second measurements is similar to the expected difference between the first and second measurements. For example, the WTRU may determine the difference between a first and second path associated with the same sensing target, DL-PRS resource, or TRP. The WTRU may further determine the LoS-NLoS indicator based on the actual difference and the expected difference between the first and second measurements.

In certain representative embodiments, a WTRU may be configured to determine the sensing LoS-NLoS indicator based on one or more one channel measurement metrics. For example, a channel measurement metric may be a coherence bandwidth, delay spread, or doppler spread. The WTRU may be configured to determine a large sensing LoS-NLoS indicator (e.g., likelihood of LoS) value if the channel coherence bandwidth is below a threshold and/or if the delay spread is above a threshold.

In certain representative embodiments, a WTRU may be configured to determine and/or report the confidence in the sensing LoS-NLoS status indicator. The WTRU may determine the confidence based on the difference between a measurement and a corresponding anticipated value. If soft indicator is used to represent the status, then the confidence may determine the value of the indicator. If a hard indicator is used, then the WTRU may determine a confidence value for determining the reliability of the indicator.

In certain representative embodiments, a WTRU may be configured to determine the sensing LoS-NLoS status indicator based on one or more types of assistance information. Assistance information may be associated with certain configuration such as a DL-PRS configuration, measurement configuration, or reporting configuration associated with a measurement. Assistance information may be based on one or more of the following: sensing bandwidth (DL-PRS bandwidth), number of symbols, transmission power, DL-PRS periodicity, DL-PRS pattern in the frequency domain, comb pattern, comb size, subcarrier spacing, symbol density in the time domain, symbol density in the frequency domain, or frequency resources.

In certain representative embodiments, a WTRU may determine whether it should further determine the sensing LoS-NLoS status indicator with more certainty or confidence if at least one of the configuration parameters are above or below a threshold. For example, the WTRU may determine whether it should further determine the sensing LoS-NLoS indicator with high confidence (e.g., closer to a configured absolute value) if the WTRU determines that at least one of the configuration parameters having a certain value may result in a higher resolution or more accurate sensing.

In certain representative embodiments, a WTRU may be configured to determine the sensing LoS-NLoS status indicator based on the frequency resources associated with at least one of the sensing configurations. The WTRU may be configured to determine a greater sensing LoS-NLoS status indicator value if the frequency of resources associated with a certain configuration is lower. A greater sensing LoS-NLoS status indicator may indicate that there is a high likelihood of actual LoS. The WTRU may be configured to determine a lesser sensing LoS-NLoS indicator if the frequency of the resources is greater. A lesser sensing LoS-NLoS status indicator may indicate that there is a low likelihood of actual LoS.

In certain representative embodiments, a WTRU may be configured to determine the sensing LoS-NLoS probability based on sensing target information. For example, the WTRU may be configured to determine the sensing LoS-NLoS indicator based on the indicated sensing target type. A large sensing target such as a vehicle or a human may be easier for the WTRU to detect because there may be multiple paths arising from such target. Contrarily, a smaller target such as a small UAV may be more difficult for a WTRU to detect. Likewise, a target with high indicated velocity (e.g., a flying UAV) may be associated with a lesser sensing LoS-NLoS indicator compared to static or slow moving sensing targets.

In certain representative embodiments, a WTRU may be configured to determine the sensing LoS-NLoS status indicator based on a sensing service area. The WTRU may receive an indication of the service area (e.g., rural or urban) and/or the TRP deployment type (e.g., micro-deployment or macro-deployment). For example, the WTRU may determine that sensing service is for a rural area or an area of macro TRP deployment. In such examples, the WTRU may determine a greater LoS-NLoS indicator (i.e., an LoS is more likely to exist) compared to an urban area or an area with micro TRP deployment.

In certain representative embodiments, a WTRU may be configured to determine an LoS-NLoS status based on at least one indication of an LoS-NLoS status for a TRP and ST link. For example, the WTRU may determine the sensing LoS-NLoS indicator for the ST to WTRU link to have a low confidence value if the TRP to ST link is in NLoS. The WTRU may determine a greater confidence value if the TRP to ST link is in LoS. An LoS for the TRP to ST link may ensure a more accurate determination of whether the ST to WTRU link is in LoS or NLoS.

In certain representative embodiments, a WTRU may be configured to determine the sensing LoS-NLoS indicator based on one or more WTRU side conditions. A WTRU side condition may include any one or more of the following: a WTRU location; a change in WTRU location; a WTRU orientation; a change of in WTRU orientation (e.g., if the WTRU rotates between measurement occasions); a WTRU velocity; a change in WTRU velocity; an error in WTRU location estimate; an error in the WTRU velocity estimate; an LoS-NLoS status between a sensing transmitter and a sensing receiver; a number of WTRU antenna elements; or WTRU beamforming capabilities.

In certain representative embodiments, a WTRU may be configured with the sensing LoS-NLoS status based on location information. For example, the WTRU may be configured with prior information about the sensing LoS-NLoS indicator based on the WTRU location received from the wireless network.

In certain representative embodiments, a WTRU may be configured to determine the LoS-NLoS status based on any one or more of the following: the distance between the sensing target and the WTRU; the difference in velocity between the sensing target and the WTRU; or the LoS-NLoS indicator associated with the sensing transmitter and the sensing receiver. The WTRU may be configured with at least one factor (e.g., as described above) that the WTRU may utilize to determine the sensing LoS-NLoS indicator. The WTRU may receive an indication of the method for determination explicitly. For example, the WTRU may receive an indication that the LoS-NLoS status determination is to be RSRPP measurement based.

In certain representative embodiments, a WTRU may be configured with an index of a set of factors (e.g., a table of factors) that indicate the method that the WTRU may use for determination. For example, if multiple factors are included, the WTRU may be configured with coefficients associated with each factor (e.g., weights) based on which the WTRU may determine the sensing LoS-NLoS indicator. For example, the WTRU may be configured with an equation and/or a lookup table with a mapping between the value ranges for different factors and the corresponding value of an LoS-NLoS indicator. In certain representative embodiments, a WTRU may be configured to report the factors and coefficients based on which it determined the sensing LoS-NLoS status.

In certain representative embodiments, a WTRU may determine LoS-NLoS information between the WTRU and target based on a RAT independent sensing method. Examples of a RAT independent sensing method may be a sensor or camera based sensing method where the method may not use downlink, uplink and/or sidelink reference signals configured by the network. The WTRU may be configured with a RAT independent sensing method by the network to determine LoS-NLoS information. The WTRU may report the determined LoS-NLoS information to the network. The WTRU may indicate to the network in the report the RAT independent sensing method used to determine LoS-NLoS information. The WTRU may report, to the network, measurements obtained from the RAT independent sensing method to determine LoS-NLoS information.

In certain representative embodiments, a WTRU may be configured to determine the sensing LoS-NLoS indication based on a determination of whether the sensing link contains a type 1 or type 2 EO. As previously described above, a type 1 EO may refer to an EO that may be characterized by properties similar to that of a typical sensing target. A type 2 may refer to an EO that may be characterized by properties that are different to that of a typical sensing target. For example, a type 1 EO may be a bird (e.g., because a bird is structurally similar to a sensing target that the WTRU may be typically configured to sense) and a type 2 EO may be a building (e.g., because a building is not structurally similar to a sensing target that the WTRU may be typically configured to sense).

In certain representative embodiments, a WTRU may send a request to the wireless network for assistance information to perform EO determination. For example, the WTRU may request for information regarding the presence of EOs in the surroundings. The WTRU may include TRP IDs, DL-PRS resource IDs, or sensing service area information in the request. The WTRU may further include at least one type of WTRU side information in the request. The WTRU may include the potential location or area that the EO may be located in. The WTRU may include, in the request, sensing modes or methods (e.g., gNB-based monostatic sensing, gNB-gNB bistatic sensing, or gNB-WTRU bistatic sensing).

In certain representative embodiments, a WTRU may be configured with properties of an EO from the wireless network. Properties of an EO may include any one or more of the following: at least one EO ID; at least one EO type (e.g., type 1, type 2, building, or UAV); at least one EO location (e.g., location coordinates or area indication); at least one property associated with the EO such as physical or mobility characteristic (e.g., size, velocity, or acceleration), material (e.g., concrete, metal, or plastic), or material properties (e.g., material conductivity or permittivity); at least one EO area indication (e.g., in terms of coarse location or a zone ID) associated with the EO; at least one reference TRP ID and/or cell ID (e.g., associated with the EO); at least one reference DL-PRS or reference UL-RS indication (e.g., in terms of DL-PRS ID or UL-RS ID) associated with the EO; at least one reference path ID; at least one time window (e.g., time window ID) associated with the EO; or at least one validity time associated with the EO.

In certain representative embodiments, a WTRU may be configured with at least one expected EO measurement from the wireless network. An expected EO measurement may include any one or more of the following: at least one EO ID; at least one EO type; or at least one expected EO measurement value and/or expected EO measurement range such as an expected EO measurement (e.g., relative delay or ToA), expected EO amplitude (e.g., associated with the power delay profile or CIR of the target path), an expected EO power measurement (e.g., RSRPP or RSRP), an expected EO frequency measurement (e.g., doppler shift measurement or micro-doppler measurement), an expected EO carrier phase measurement (e.g., RSCP or RSCPD), an expected EO angle measurement (e.g., AoA or AoD), or an expected EO time measurement (e.g., relative delay, ToA, or ToF).

In certain representative embodiments, a WTRU may receive an indication of reference associated with at least one measurement. For example, the WTRU may receive an indication of any one or more of the following references: at least one reference DL RS resource (e.g., reference DL RS resource ID, or reference DL RS resource set ID); at least one reference TRP ID and/or reference cell ID; at least one path measurement (e.g., LoS path between TRP and WTRU); at least one direction (e.g., north); at least one indication of whether at least one sensing link (e.g., associated with the expected sensing measurement) is in LoS or NLoS such as when the WTRU receives an indication that the indicated expected EO measurement is based on assumption that at least one sensing link (e.g., between ST and WTRU) is either in LoS or NLoS; or least one polarization measurement associated with the transmitted signal.

In certain representative embodiments, a WTRU may be configured with at least one expected statistic of an EO measurement from the wireless network. An expected statistic may be an expected n-th moment (e.g., a mean or variance) associated with at least one measurement or an expected density/distribution associated with at least one measurement. For example, the WTRU may be configured with at least one probability density, distribution, or factor associated with a density, indicating the expected spread of the EO measurements for one or more values of a sensing LoS-NLoS indicator.

In certain representative embodiments, a WTRU may be configured with at least one expected difference between a first and a second measurement for an EO. The first and/or the second measurement may include any one or more of the following: one or more path measurements; one or more non-path measurements; one or more DL-PRS resources; one or more cells; one or more measurement occasions; or one or more sensing entities.

In certain representative embodiments, a WTRU may be configured to determine if at least one sensing path is associated with an EO. Methods for a sensing LoS-NLoS status determination for an EO are further described below.

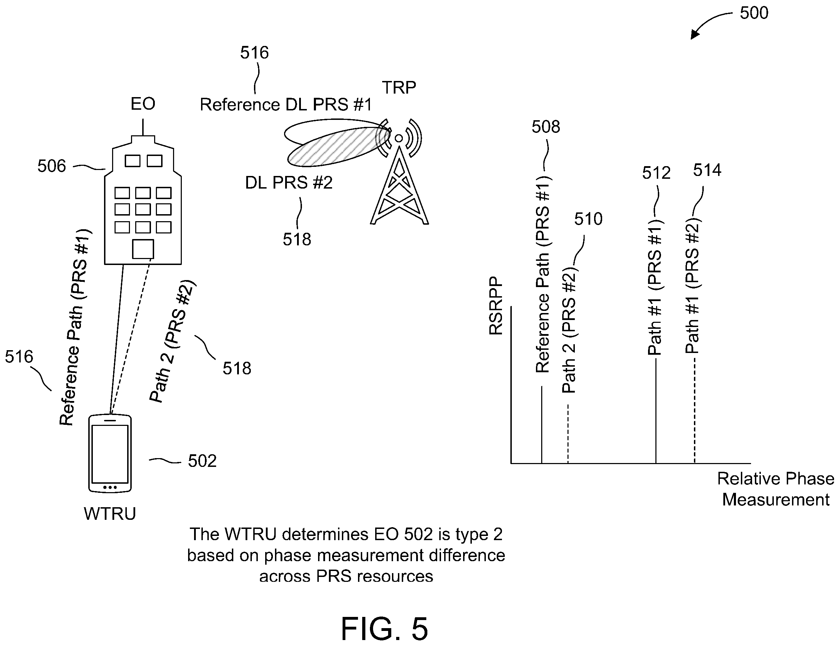

FIG. 5 is a diagram illustrating how a WTRU determines whether an EO is a type 2 EO, in accordance with certain embodiments. In diagram 500, WTRU 502 (which may correspond to any of WTRUs 102a-102d, 210, 305, or 402) is configured to perform relative measurements across one or more DL-PRS resources. For example, WTRU 502 may perform measurements 508 and 512 using first DL-PRS 516; WTRU 502 may perform measurements 510 and 514 using second DL-PRS 518. Such measurements may be RSRPP and phase measurements. Based on a difference (e.g., a difference below a threshold) between measurements across PRS resources, WTRU 502 may determine that EO 506 is of type 2.

In certain representative embodiments, a WTRU may receive DL-PRS configurations to determine whether a target is a type 2 EO. The WTRU may further receive assistance information such as a reference PRS ID, an associated reference sensing path, a location of the target, or EO material property information (e.g., relative permittivity or conductivity). The WTRU may further perform relative measurements using one or more configured PRS resources include the reference PRS ID such that measurements are relative to a reference path. The WTRU may further determine that a path corresponds to a type 2 EO based on if a relative measurement is below a threshold. The WTRU may further determine type 2 EO characteristics based in path measurements corresponding to type 2 EO paths. For example, the WTRU may determine the material properties of an EO based on RSRPP measurements. For example, the WTRU may determine size or location properties based on AoA measurements. The WTRU may further report to the wireless network any one or more of the following: whether the DL-PRS is associated with a type 2 EO; determined material or size information of the EO; measurements corresponding to the EO; or DL-PRSs that are associated with the EO.

In certain representative embodiments, a WTRU may be configured to determine that certain measurements are associated with a type 2 EO. For example, if at least one relative measurement is above a threshold, then the WTRU may determine that certain measurements are associated with a type 2 EO. Type 2 EOs may exhibit specular reflection properties where the polarization or the phase of the received signal is dependent on the phase or polarization of the transmitted signal. The WTRU may be configured to determine if a measurement corresponds to an EO based on such deterministic measured phase or polarization over the DL-PRS resources or measurement occasions.

In certain representative embodiments, a WTRU may be configured to perform relative measurements with respect to reference measurements in order to determine whether an EO is type 2. For example, the measurements (e.g., relative measurements and the reference measurements) may be associated with at least one of the following: a reference path, a reference DL-PRS resource and/or measurement occasion, a reference DL-PRS resource set, a reference TRP, or a reference cell ID.

In certain representative embodiments, a WTRU may be configured to determine an association between a measurement based on a reference path and another path based on one or more of the following conditions: a measurement (e.g., relative to reference measurements) is above or below a threshold; the difference between the measurements is above or below a threshold; a statistic associated with the measurements is above or below a threshold; or if an uncertainty value associated with the measurements is above or below a threshold.

In certain representative embodiments, a WTRU may be configured to associate two measurements if at least one of the WTRU side conditions are the same between measurement occupations.

In certain representative embodiments, a WTRU may be configured to associate the measurements if the duration between the occasions is below a threshold.

In certain representative embodiments, a WTRU may be configured to measure the relative phase measurement such that the reference phase is determined based on a first DL-PRS resource and the relative measurement is determined based on a second DL-PRS resource. The WTRU may determine that the measurement corresponds to a type 2 EO if the relative phase measurement is below a threshold.

In certain representative embodiments, a WTRU may be configured to measure a change in polarization between the transmitted and received signal. The WTRU may determine that the measurement corresponds to a type 2 EO if the difference between a measured and expected polarization between the transmitted and received signal is below a threshold. Likewise, the WTRU may also determine that the EO corresponds to a type 2 EO with a specular reflection property if the difference between the polarization across more than one DL-PRS resources is below a threshold.

In certain representative embodiments, a WTRU may be configured to perform at least one relative measurement with respect to a reference measurement across one or more resources (e.g., DL-PRS beams, time, or frequency spatial). The WTRU may determine the size of the EO based on the spatial coverage (e.g., range of angle measurements such as an AoA or AoD) based on the associated measurements in one or more resources. The WTRU may determine that the measurements may correspond to such EOs if the spatial coverage (e.g., area coverage based on the DL-PRS beams) of the associated measurements are above a threshold. For example, the WTRU may determine that the relative delay measurement and RSRPP measurements between two or more DL-PRS resources are associated, and the WTRU may hence determine that the reflection is caused by the same sensing target or EO.

In certain representative embodiments, a WTRU may be configured to determine if a sensing path corresponds to a measurement related to an EO based on any one or more of the following: the difference between at least one determined EO property and/or the indicated expected EO property such as the difference between the determined EO location and expected EO location, the difference in velocity of an EO and the expected EO velocity, or the difference between the determined EO size and the expected EO size; the difference between at least one measurement associated with the EO and the expected EO measurement; at least one statistic and/or the uncertainty associated with the measured EO; at least one expected statistic of measurement indicated by the wireless network; at least one uncertainty in measurement; at least one measured path (e.g., not associated with the EO, associated with at least one sensing target, or sensing clutter); or at least one channel measurement (e.g., coherence bandwidth, doppler spread, or delay spread).

In certain representative embodiments, a WTRU may be configured to determine and/or report the size of an EO based on at least one of the following: at least one DL-PRS resource/DL-PRS resource set and the associated properties (e.g., AoD or beamwidth associated with the DL-PRS resource); at least one measurement value associated with the EO (e.g., AoA); at least one EO property (e.g., EO location); at least one WTRU side condition (e.g., WTRU location); at least one range of measurements associated with the EO (e.g., minimum AoA or maximum AoA of the measurements associated with the EO); or the uncertainty in at least one measurement associated with the EO.

In diagram 500, WTRU 502 may determine that first DL-PRS 516 and second DL-PRS 518 are both associated with EO 506. WTRU 502 may determine the size of EO 502 based on the spatial coverage and based on the DL-PRS beams associated with each of first DL-PRS 516 and second DL-PRS 518. Similarly, WTRU 502 may determine an EO size based on the distance between TRP 504 and EO 506 or WTRU 502 and EO 506. If WTRU 502 determines that the sensing path associated with EO 506 corresponds to an AoA range of a certain number of degrees relative to the reference, WTRU 506 may determine the size of the EO based on the angle range. WTRU 502 may report the size of EO 502 as a categorical value (e.g., large, medium, or small) or as a numerical value (e.g., as a percentage, volume, or area).

In certain representative embodiments, a WTRU may receive a request to associate measurements that correspond to the EO. For example, the WTRU may be configured to measure more than DL-RS. The WTRU may report an association among a subset of the DL-RSs that may be reflected against the same environmental object. For example, the WTRU may be configured with DL-RS#1, DL-RS#2 and DL-RS#3. The WTRU may report that DL-RS#1 and DL-RS#2 are associated with an environmental object. The WTRU may report an association of measurements made from different DL-RSs (e.g., DL-RS#1 and DL-RS#2). The WTRU may report more than one association of measurements or DL-RSs such that each association may correspond to a different environmental object. The WTRU may be configured with the maximum number of associations that the WTRU can report.

In certain representative embodiments, a WTRU may receive an indication from the wireless network that the configured DL-RSs are for the determination of a type of an EO or size of an EO. The WTRU may be configured with parameters for a time window. During the time window, the WTRU may receive the configured DL-RSs. The WTRU may report measurements made during the configured time window and report the result of determination (e.g., a type of an environmental object, size of environmental object, or whether reflection is specular or random).

In certain representative embodiments, a WTRU may receive a request from the network to fix a receiving beam. The WTRU may be configured with a time window during which the WTRU is expected to fix a receiving beam or maintain WTRU side conditions (e.g., no rotation or no movement). The WTRU may report changes to side conditions to the wireless network.

In certain representative embodiments, a WTRU may determine the sensing LoS-NLoS indicator based on any one or more of the following factors: whether an EO is associated with measurement performed by the WTRU (e.g., associated based on the same DL-PRS resource, TRP, or cell); an indicated or determined EO property such as an EO location, EO size, EO type, or EO material property; at least one WTRU side condition; a TRP location; or a sensing mode. For example, if the WTRU determines that a type 2 EO of large size is associated with at least one DL-PRS resource, is within a sensing area, or is within a threshold distance to the WTRU or TRP, then the WTRU may determine a high likelihood of LoS. The sensing area may be a function of any one or more of the location of the sensing transmitter, the location of the sensing receiver, or at least one reference signal aspect (e.g., SRSp transmission configuration properties such as transmission power).

In certain representative embodiments, a WTRU may be configured to use and/or report at least one type of information determined to be associated with an EO. Types of information determined to be associated with an EO may include any one or more of the following: measurements associated with an EO as a reference for at least one measurement; processing information (e.g., filtering, noise removal) for at least one sensing measurement (e.g., removal of reflections associated with an EO); a determination of uncertainties in sensing procedures or events; probabilities of false alarm or missed detections; or a determination and of at least one sensing target information based on the determination of the existence of an EO.

In certain representative embodiments, a WTRU may perform any of the operations described above at least in connection with FIG. 5 based on any one or more of the following: at least one determined or indicated type information associated with an EO (e.g., EO location, EO velocity, or EO size); at least one measurement associated with an EO; at least one statistic associated with a measurement of an EO; or at least one determined or indicated sensing LoS-NLoS indicator associated with two or more sensing entities.

In certain representative embodiments, a WTRU may be configured to report determinations (e.g., measurements) to the wireless network. Such determinations may include any one or more of the following: at least one difference between measurements (e.g., between measurement occasions, resources, paths, TRPs, or cells); at least one statistic associated with a measurement; at least one uncertainty value associated with a measurement; a sensing LoS-NLoS status indicator between at least one two sensing entities (e.g., a TRP to ST sensing LoS-NLoS indication, an ST to WTRU sensing LoS-NLoS indication, or a TRP to WTRU sensing LoS-NLoS indication); at least one confidence indicator (e.g., in case of a hard indicator) associated with a sensing LoS-NLoS indicator; at least one validity duration associated with a sensing LoS-NLoS indicator; an indication of whether the sensing path is associated with an EO; at least one type of information associated with an EO such as an EO ID, EO size, EO material property, EO location, or EO velocity; at least one uncertainty value in an EO determination; at least one measurement (e.g., relative measurement) associated with a determined EO; at least one statistic associated with a determined EO; at least one DL-PRS resource ID (e.g., DL-PRS resource set ID or DL-PRS beam ID) associated with at least one measurement or at least one sensing LoS-NLoS status indication; at least one associated parameter (e.g., cell ID, TRP ID, or PFL ID) associated with the sensing LoS-NLoS status indication; a timestamp associated with at least one measurement (e.g., in terms of time index units); at least one reference measurement, resource, beam, TRP, or cell; a sensing LoS-NLoS determination method, factor, coefficient, or weight used per factor (e.g., measurement based or EO based); at least one WTRU side characteristic such as a WTRU location or velocity; an indication of whether an EO is or can be used as a reference for at least one measurement; an indication of whether an EO is or can be used for processing (e.g., filtering, noise removal) of at least one sensing measurement (e.g., removal of reflections associated with the EO); an indication of whether an EO is or can be used for determination of uncertainties or any other similar metrics in sensing procedures such as probabilities of missed detections; or an indication of whether an EO is or can be used to determine at least one sensing target information (e.g., sensing target location or velocity).

In certain representative embodiments, a WTRU may determine to report the sensing LoS-NLoS status indicator to the wireless network. The WTRU may indicate that the determined the LoS-NLoS status corresponds to the status between the WTRU and sensing target. The WTRU may determine to report more than one LoS-NLoS status (e.g., more than one LoS or NLoS indicator) associated with the WTRU and sensing target. The WTRU may indicate a location in the report such that the location corresponds to the sensing target's location. The WTRU may indicate an area in the report indicating the LoS-NLoS status between the WTRU and a sensing target in the area.

In certain representative embodiments, a WTRU may indicate an LoS-NLoS status for one of the configured DL-RSs indicated by the wireless network.

In certain representative embodiments, a WTRU may receive a request to determine an LoS-NLoS status between the WTRU and a sensing target. The WTRU may associate the LoS-NLoS status with the LoS-NLoS status indicated by the wireless network. For example, the WTRU may receive, from the wireless network, an LoS-NLoS status for a TRP or DL-PRS, indicating the LoS or NLoS status between the TRP and sensing target. The WTRU may determine to report the sensing LoS-NLoS status, and associate the said status with the sensing LoS-NLoS status given by the network, thus completing the LoS-NLoS status between TRP and ST, and ST and WTRU.

In certain representative embodiments, a sensing LoS-NLoS status indicated by the wireless network may be associated with an ID or index. The WTRU may report said association between the determined LoS-NLoS status and the index.

In certain representative embodiments, a WTRU may report a determined sensing LoS-NLoS status based on a provided sensing LoS-NLoS status from the network. For example, the WTRU may receive the sensing LoS-NLoS status for a TRP from the network, and the said status may indicate an LoS status between TRP and sensing target. The WTRU may determine the sensing LoS-NLoS status between the WTRU and sensing target. The WTRU may report a processed LoS-NLoS status indicating an overall LoS or NLoS condition between a first link and second link. The first link may be between a TRP and ST. The second link may be between an ST and WTRU. The WTRU may report the procseed sensing LoS-NLoS status indicator for the TRP or DL-RS (e.g., indicated by the wireless network). Examples of the processed LoS-NLoS status may be described as any one or more of the following.

A processed LoS-NLoS status may be based on an average value of the sensing LoS-NLoS status indicator for the first link and second link. For example, if the sensing LoS-NLoS status indicator for the first and second link are 0.8 and 0.2, respectively, the averaged overall sensing LoS-NLoS status indicator may be 0.5.

A processed LoS-NLoS status may be based on a multiplicative value of the sensing LoS-NLoS status indicator for the first and second link. For example, if the sensing LoS-NLoS status indicator for the first and second link are 0.8 and 0.2, respectively, the overall sensing LoS-NLoS status indicator may be 0.16.

A processed LoS-NLoS status may be based on a logical operation between the sensing LoS-NLoS status indicator for the first and second link. For example, suppose the logical operation is AND. Then, if the sensing LoS-NLoS status indicator for the first link is 1 and the sensing LoS-NLoS status indicator for the second link is 0, the resulting sensing LoS-NLoS status indicator indicator for the first and second link may be 0.

In certain representative embodiments, a WTRU may send a request to a wireless network for the processed sensing LoS-NLoS status for an indicated TRP, DL-RS, or area.

In certain representative embodiments, if a WTRU was configured with a sensing LoS-NLoS indicator by the network, the WTRU may be configured to report whether the indicated status information was the correct indication. For example, the WTRU may report a binary value indicative of a true or false statement.

In certain representative embodiments, a WTRU may be configured to report an uncertainty value associated with a measurement. As previously descrbed above, a measurement may refer to any one or more of a power, timing, AoA, phase, or statistical metric such as a standard deviation, mean or variance. The WTRU may receive an expected range or uncertainty for measurements from the wireless network.

In certain representative embodiments, a WTRU may be configured to report whether a measurement corresponds to a type 2 EO (e.g., a surface with specular reflection) or type 2 non-EO target (e.g., a surface with random reflection). The WTRU may be configured to report more than one type of target (e.g., a surface with specular reflection or a surface with random reflection). The WTRU may receive a request from the wireless network (e.g., from a gNB, LMF, or sensing function) to report the detected type of target such that the WTRU selects the type of the target from the configured list of types of a target. The WTRU may receive a request to report the metric associated with the detection such as an uncertainty or range of the measurements used to detect the type of the target.

In certain representative embodiments, a WTRU may be configured to determine and/or report a validity duration of a sensing LoS-NLoS indicator. The WTRU may determine a validity duration based on any one or more of the following: an uncertainty associated with at least one measurement; whether at least one measurement exceeds a threshold; whether the difference between at least one measurement exceeds a threshold; whether a statistic of at least one measurement is above or below a threshold; whether at least one WTRU side condition is above or below a threshold; whether at least one measurement not associated with the sensing target (e.g., sensing clutter or an EO) is above a threshold; a confidence value of the sensing LoS-NLoS status indicator; or a determined value of the sensing LoS-NLoS status indicator.

In certain representative embodiments, a WTRU may be configured to determine and/or report a validity of a sensing LoS-NLoS indicator to the wireless network. The WTRU may repory the validity in terms of a time duration unit.

Methods for the determination, activation, deactivation, or switching of a configuration of a WTRU are described further below.

In certain representative embodiments, based on sensing measurements and/or the processing of sensing measurements (e.g., averaging, a sensing LoS-NLoS indication determination, or uncertainty determination), a WTRU may be configured to request, activate, or deactivate a first or a second configuration (e.g., a DL-PRS configuration, measurement configuration, reporting configuration, or uplink configuration). The WTRU may further or instead be configured to switch from a first to a second configuration.

In certain representative embodiments, a WTRU may be configured to request, activate, deactivate, or switch from a first configuration to a second configuration based on any one or more of the following trigger conditions: the WTRU receives an indication from the wireless network (e.g., a dynamic indication such as DCI or MAC-CE or semi-static indication such as via RRC); the determined sensing LoS-NLoS indicator between at least two or more sensing entities is above or below a threshold if the LoS-NLoS indicator is a soft indicator; the determined sensing LoS-NLoS indicator between at least two or more sensing entities indicates an LoS or NLoS (e.g., as a binary or categorical representation) if the LoS-NLoS status is a hard indicator; the WTRU determines that at least one measurement corresponds to an EO; at least one measurement is above or below a threshold; the difference between at least two measurements are above or below a threshold; the statistic associated with at least one measurement is above or below a threshold; the determined uncertainty associated with at least one measurement is above or below a threshold; the sensing target and/or EO being located in an indicated area (e.g., associated with activation, deactivation, or switching of at least one configuration); the determined sensing target and/or EO velocity is above or below a threshold; the sensing target and/or EO material type is associated with a particular configuration; based on at least one WTRU side condition such as whether the WTRU is located in an indicated location associated with a particular configuration, whether a change in WTRU location (e.g., between measurement occasions) is above or below a threshold, whether the change in WTRU orientation is above or below a threshold, or whether the change of WTRU velocity is above or below a threshold, whether the error in a location estimate of the WTRU is above or below a threshold, or whether the error in a velocity estimate of the WTRU is above or below a threshold.

In certain representative embodiments, a WTRU may receive at least one configuration associated with a sensing mode. For example, the WTRU may be configured to request, activate or switch to a downlink bistatic sensing mode based on any one or more of the following conditions: based on at least one of the conditions described as trigger conditions to request, activate, deactivate or switch to a second configuration; whether the WTRU is indicated or determines the sensing LoS-NLoS status indicator associated with the TRP or the second WTRU to ST and ST to WTRU link is above a threshold; whether the WTRU is indicated or determines the sensing LoS-NLoS status indicator associated with the TRP or the second WTRU to ST and ST to WTRU is determined as a LoS indicator; whether the distance between at least two sensing entities (e.g., TRP-WTRU, second WTRU-WTRU, TRP-ST, or ST-WTRU distance) is below a threshold, whether the sensing area is within the sensing coverage determined based on the locations of at least one sensing entity, TRP transmission power, or TRP transmission beam; or a lack of a WTRU capability (e.g., duplexing capabilities).

In certain representative embodiments, a WTRU may be configured to request, activate or switch to an uplink bistatic sensing mode based on any one or more of the following: based on at least one of the conditions described as trigger conditions to request, activate, deactivate or switch to a second configuration; whether the WTRU is indicated or determines the sensing LoS-NLoS status indicator associated with the TRP or a second WTRU to ST and ST to the WTRU link is above a threshold or indicates an LoS; whether the distance between at least two sensing entities is below a threshold; whether the sensing area is within the sensing coverage determined based on the locations of at least one sensing entity, WTRU transmission power, or WTRU transmission beam; or if the WTRU does not have capabilities to perform monostatic sensing.

The difference between uplink and downlink bistatic sensing may be whether the sensing coverage region as transmission power in uplink is lower than that of downlink and the transmission beam from TRP may be finer than that in uplink case. Hence, the WTRU may be configured to determine to activate or switch to an uplink TRP to WTRU bistatic sensing mode if the distance between any two sensing entities is below a threshold. Otherwise, the WTRU may determine to active a downlink TRP to WTRU bistatic sensing mode. If the sensing coverage region is smaller, then the WTRU may determine to activate or switch to an uplink sensing mode. Otherwise, the WTRU may determine to active a downlink sensing mode. The WTRU may determine the uplink or downlink sensing mode based on the sensing service area where the WTRU may be configured for sensing.

In certain representative embodiments, a WTRU may be configured to request, activate or switch to a WTRU monostatic sensing mode based on any one or more of the following: based on at least one of the conditions described as trigger conditions to request, activate, deactivate, or switch to a second configuration; if the WTRU determines the sensing LoS-NLoS status indicator associated with the TRP to ST link is below a threshold or is indicative of NLoS; if the WTRU determines the sensing LoS-NLoS status indicator associated with the ST to WTRU link is above a configured threshold or is indicative of an LoS; if the distance between at least one TRP or at least one WTRU and the WTRU is above a threshold; whether the sensing area is within the sensing coverage determined based on the locations of at least one sensing entity, WTRU transmission power, or WTRU transmission beam; or if the WTRU has capabilities to perform monostatic sensing.

In certain representative embodiments, a WTRU may be configured to request, activate, deactivate, or switch from a first to a second DL-PRS configuration based on at least one trigger condition to request, activate, deactivate or switch from a first to a second configuration. For example, the WTRU may be configured to request, activate, deactivate, or switch to a second DL-PRS configuration with a second bandwidth, a second periodicity of DL-PRS resources, or a second density of DL-PRS resources if the sensing LoS-NLoS status indicator between at least one of the link between two sensing entities is above or a below a threshold. Another condition may be if the link between two sensing entities is indicative of either an LoS or NLoS.

In certain representative embodiments, a WTRU may be configured to request, activate, deactivate, or switch from a first to a second measurement configuration based on at least one trigger condition to request, activate, deactivate or switch from a first to a second configuration. For example, the WTRU may be configured to request, activate, deactivate, or switch to a second measurement configuration with a second number of samples per measurement, a second measurement quantity (e.g., AoD or AoA), or a second processing mechanism (e.g., measurement averaging) if the sensing LoS-NLoS status indicator between at least one link between two sensing entities is above or below a threshold. Another condition may be if the link between two sensing entities is indicative of either an LoS or NLoS.

In certain representative embodiments, a WTRU may be configured to request, activate, deactivate, or switch from a first to a second reporting configuration based on at least one trigger condition to request, activate, deactivate, or switch from a first to a second configuration. For example, the WTRU may be configured to request, activate, deactivate, or switch to a second reporting configuration with a second reporting type (e.g., trigger based reporting or periodic reporting), a second reporting granularity of measurement quantity (e.g., granularity of time measurement or slot level granularity), or a second reporting periodicity if the sensing LoS-NLoS status indicator of a link between two sensing entities is above or below a threshold. Another condition may be if the link between two sensing entities is indicative of either an LoS or NLoS.

In certain representative embodiments, a WTRU may be configured to switch to a configuration or determine not to report measurements if at least one trigger condition to request, activate, deactivate, or switch from a first to a second configuration is satisfied.

In certain representative embodiments, a WTRU may be configured to request, activate, deactivate, or switch from a first to a second SRSp configuration based on at least one of trigger condition to request, activate, deactivate or switch from a first to a second configuration. For example, the WTRU may be configured to request, activate, deactivate, or switch to a second SRSp configuration with a second bandwidth, a second periodicity of SRSp resources, a second density of SRSp resources if the sensing LoS-NLoS status indicator of at least one link between two sensing entities is above or below a threshold. Another condition may be if the link between two sensing entities is indicative of either an LoS or NLoS.

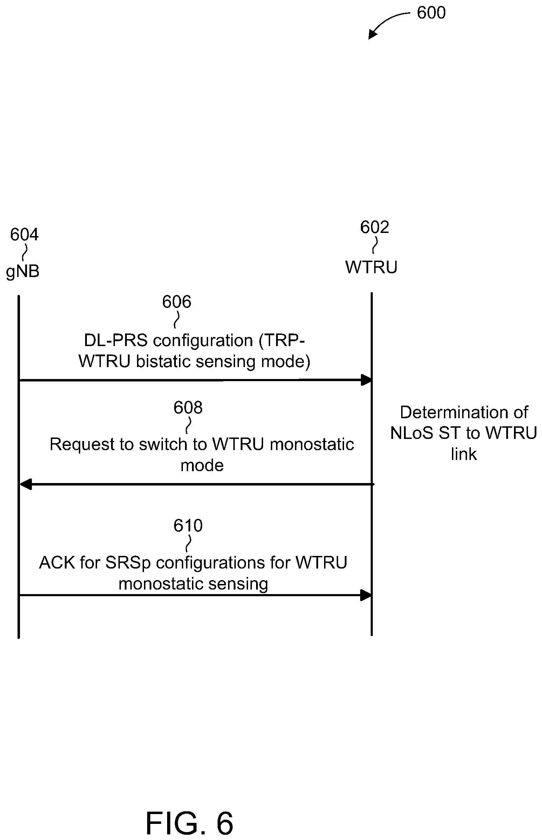

In certain representative embodiments, a WTRU may be configured to request, activate, deactivate, or switch from the first configuration to a second configuration based on the determined sensing mode or the associated sensing mode to the determined configuration. As further described below in FIG. 6, a WTRU may received an acknowledgement message from a wireless network when switching to a second configuration.

FIG. 6 is a diagram illustrating how a WTRU may switch from a TRP-WTRU bistatic sensing mode to a WTRU monostatic sensing mode, in accordance with certain embodiments. In diagram 600, WTRU 602 (which may correspond to any of WTRUs 102a-102d, 210, 305, 402, or 502) may be in communication with gNB 604 (which may correspond to any of gNBs 180a-180c or 208). At 606, WTRU 602 may be configured under a DL-PRS configuration indicating a TRP-WTRU bistatic sensing mode from gNB 604. At 608, WTRU 602 may determine an NLoS for a link between WTRU 602 and a given sensing target. At 608, WTRU 602 may further request to switch to a WTRU monostatic sensing mode to gNB 604. At 610, WTRU 602 may receive an acknowledgement indication for an SRSp configuration for WTRU monostatic sensing.

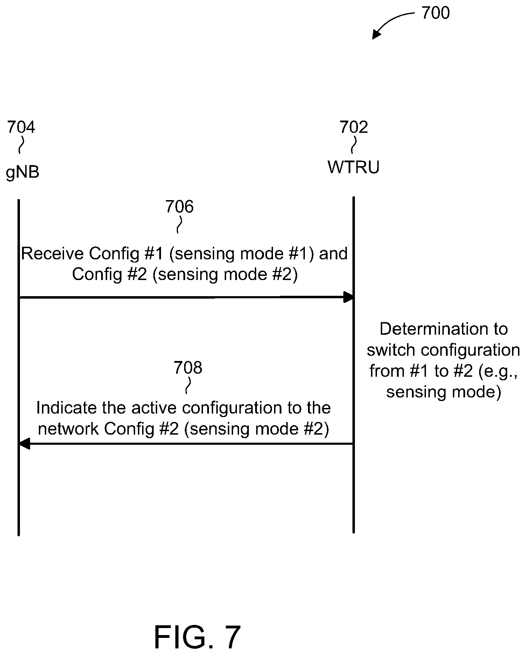

A WTRU may be configured with multiple configuration as further described below in connection with FIG. 7.

FIG. 7 is a diagram illustrating how a WTRU activates a particular sensing configuration, in accordance with certain embodiments. In diagram 700, WTRU 702 (which may correspond to any of WTRUs 102a-102d, 210, 305, 402, 502, or 602) may be in communication with gNB 704 (which may correspond to any of gNBs 180a-180c, 208, or 604). At 706, WTRU 702 may receive a first configuration and a second configuration from gNB 704. WTRU 702 may be configured to operate under the first configuration. At 708, WTRU 702 may determine to switch from the first configuration to the second configuration. At 708, WTRU 702 may further send an indication that the second configuration is the active configuration to gNB 708. That is, WTRU 702 may be configured with more than one configuration (e.g., on-demand configurations). WTRU 702 may determine to switch its configuration and indicate the active or inactive configuration to gNB 704. WTRU 704 may be configured to report the associated (e.g., active, inactive) sensing configuration to the gNB 704.

In certain representative embodiments, a WTRU may be configured to deactivate a configuration and/or terminate the sensing procedure based on at least one a trigger condition to request, activate, deactivate, or switch from a first to a second configuration. For example, the WTRU may determine and/or indicate to the network to terminate the sensing procedure if the WTRU determines that the sensing LoS-NLoS status indicator for at least one link between two sensing entities is below a threshold. Another condition may be if the link between two sensing entities is indicative of NLoS.

In certain representative embodiments, a WTRU may be configured to report an active, inactive, or preferred configuration or sensing mode.

In certain representative embodiments, a WTRU may request, from a wireless network, to activate, deactivate, or switch a configuration by reporting a preferred configuration to the wireless network. For example, the WTRU may utilize dynamic signalling such as UCI or MAC-CE, any suitable uplink lower layer signalling, or any suitable uplink higher level signalling.

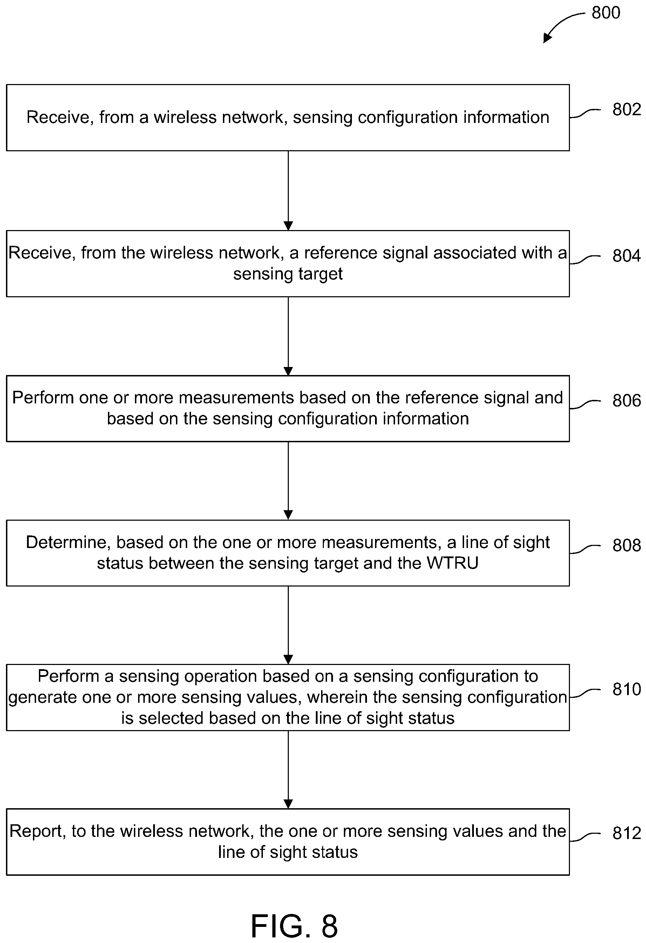

FIG. 8 is a flowchart of an illustrative method performed by a WTRU for determining a sensing configuration based on an LoS status, in accordance with certain embodiments. In this disclosure, reference to a WTRU may refer to any one of suitable WTRUs 102a-102d, 210, 305, 402, 502, 602, or 702. In this disclosure, reference to a wireless network may refer to any one or more of RAN 104, RAN 113, eNB 160a-160c, gNB 180a-180c, gNB 208, TRP 320, TRP 406, TRP 504, gNB 604, or gNB 704.

Diagram 800 illustrates one or more operations performed by a WTRU.

At 802, a WTRU may receive, from a wireless network, sensing configuration information.

In certain representative embodiments, a sensing bandwidth, a number of symbols in a time domain, a density of reference signals, a number of samples per measurement, a reporting periodicity, or a reporting quantity.

At 804, the WTRU may receive, from the wireless network, a reference signal associated with a sensing target.

In certain representative embodiments, the reference signal corresponds to any one or more of the following: a PRS, a DL-PRS, a DL-RS, an SL-PRS, an SRS, or an SRSp.

At 806, the WTRU may perform one or more measurements based on the reference signal and based on the sensing configuration information.

At 808, the WTRU may determine, based on the one or more measurements, a line of sight status between the sensing target and the WTRU.

In certain representative embodiments, the WTRU determining the LoS status includes the WTRU determining that at least one measurement of the one or more measurements exceeds a threshold. The one or more measurements may include any one or more of an RSRP, an RSRPP, a delay, a relative delay, an AoA, a doppler shift, a delay spread, an RSTD, a receive-transmit time difference with respect to the WTRU, an RSCP, an RSCPD, or a micro-doppler measurement. The WTRU may determine whether at least one measurement exceeds the threshold. The WTRU may, based on determining whether the at least one measurement exceeds the threshold, determine that the LoS status is one of an LoS or a non-LoS.

In certain representative embodiments, the WTRU determining the LoS status includes the WTRU receiving, from the wireless network, one or more expected LoS measurements and one or more thresholds. The WTRU may determine whether a difference between the one or more expected LoS measurements and the one or more measurements exceeds at least one threshold of the one or more thresholds. The WTRU may, based on determining whether the difference exceeds the threshold, determine that the LoS status is one of an LoS or a non-LoS.

In certain representative embodiments, the WTRU determining the LoS status includes any one or more of the following: receiving an indication from the wireless network to determine the LoS status, determining that at least one measurement of the one or more measurements exceeds a first threshold, determining that one or more WTRU-related parameters exceeds a second threshold, determining that one or more sensing configuration parameters exceeds a third threshold, or determining that the WTRU failed to decode at least one transmission from the wireless network. In certain representative embodiments, the one or more WTRU-related parameters include any one or more of a change in location, a change in orientation, a change in velocity, an error in an estimated location, an error in an estimated velocity, an indication of whether there is a LoS between the WTRU and a TRP, a number of WTRU antenna elements, or an indication of whether the WTRU has beamforming capabilities.

At 810, the WTRU may perform a sensing operation based on a sensing configuration to generate one or more sensing values, where the sensing configuration is selected based on the line of sight status.

In certain representative embodiments, the one or more sensing values include any one or more of the following: an RSRP, an RSRPP, a delay, a relative delay, an AoA, a doppler shift, a delay spread, an RSTD, a receive-transmit time difference with respect to the WTRU, an RSCP, an RSCPD, an RCS, a micro-doppler measurement, or a CIR.

At 812, the WTRU may report, to the wireless network, the one or more sensing values and the line of sight status.

In certain representative embodiments, a WTRU may report at least one of the sensing configuration selected or a second LoS status between the WTRU and a TRP to the wireless network.

In certain representative embodiments, the LoS status includes a first LoS status. The WTRU may determine a second LoS status between the sensing target and a TRP where if the first LoS indicates an LoS between the WTRU and the sensing target and if the second LoS indicates an LoS between the TRP and the sensing target, then the WTRU is configured to operate under a bistatic sensing mode. If the first LoS indicates an LoS between the WTRU and the sensing target and if the second LoS indicates no LoS between the TRP and the sensing target, the WTRU is configured to operate under a monostatic sensing mode.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of wireless communication capable devices, (e.g., radio wave emitters and receivers). However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, or any suitable combination thereof. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be affected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, or any suitable combination thereof, and a transmission type medium such as a digital and/or an analog communication medium (e.g., a fiber optic cable, a waveguide, a wired communications link, a wireless communication link,.

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to"). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, or any suitable combination thereof. As a non-limiting example, each range discussed herein may be readily broken down into a lower third, middle third and upper third, or any suitable combination thereof. As will also be understood by one skilled in the art all language such as "up to," "at least," "greater than" "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect.

## Claims

1. A method performed by a wireless transmit/receive unit (WTRU), comprising:
receiving, from a wireless network, sensing configuration information;
receiving a reference signal (RS), from the wireless network, associated with a sensing target (ST);
performing one or more measurements based on the RS and based on the sensing configuration information;
determining, based on the one or more measurements, a line of sight (LoS) status between the ST and the WTRU;
performing a sensing operation based on a sensing configuration to generate one or more sensing values, wherein the sensing configuration is selected based on the LoS status; and
reporting, to the wireless network, the one or more sensing values and the LoS status.

2. The method of claim 1, wherein the LoS status comprises a first LoS status, the method further comprising:
determining a second LoS status between the ST and a transmit/receive point (TRP), wherein:
if the first LoS status indicates an LoS between the WTRU and the ST and when the second LoS status indicates an LoS between the TRP and the ST, configuring the WTRU for a bistatic sensing mode, and
if the first LoS status indicates the LoS between the WTRU and the ST and when the second LoS status indicates no LoS between the TRP and the ST, configuring the WTRU for a monostatic sensing mode.

3. The method of any one of claims 1-2, wherein determining the LoS status comprises:
determining that at least one measurement of the one or more measurements exceeds a threshold, wherein the one or more measurements comprise any one or more of:
a reference signal received power (RSRP);
a reference signal received power per path (RSRPP);
a delay;
a relative delay;
an angle of arrival (AoA);
a doppler shift;
a delay spread;
a reference signal time difference (RSTD);
a receive-transmit time difference with respect to the WTRU;
a reference signal carrier phase (RSCP);
a reference signal carrier phase difference (RSCPD); or
a micro-doppler measurement;
determining whether the at least one measurement exceeds the threshold; and
based on determining whether the at least one measurement exceeds the threshold, determining that the LoS status is one of an LoS or a non-LoS.

4. The method of any one of claims 1-3, wherein determining the LoS status comprises:
receiving, from the wireless network, one or more expected LoS measurements and one or more thresholds;
determining whether a difference between the one or more expected LoS measurements and the one or more measurements exceeds at least one threshold of the one or more thresholds; and
based on determining whether the difference exceeds the at least one threshold, determining that the LoS status is one of an LoS or a non-LoS.

5. The method of any one of claims 1-4, wherein determining the LoS status comprises any one or more of:
receiving an indication from the wireless network to determine the LoS status;
determining that at least one measurement of the one or more measurements exceeds a first threshold;
determining that one or more WTRU-related parameters exceeds a second threshold;
determining that one or more sensing configuration parameters exceeds a third threshold; or
determining that the WTRU failed to decode at least one transmission from the wireless network.

6. The method of claim 5, wherein the one or more WTRU-related parameters comprise any one or more of:
a change in location;
a change in orientation;
a change in velocity;
an error in an estimated location;
an error in an estimated velocity;
an indication of whether there is an LoS between the WTRU and a transmit/receive point (TRP);
a number of WTRU antenna elements; or
an indication of whether the WTRU has beamforming capabilities.

7. The method of any one of claims 1-6, wherein the one or more sensing configuration parameters comprise any one or more of:
a sensing bandwidth;
a number of symbols in a time domain;
a density of reference signals;
a number of samples per measurement;
a reporting periodicity; or
a reporting quantity.

8. The method of any one of claims 1-7, wherein the one or more sensing values comprise any one or more of:
a reference signal received power (RSRP);
a reference signal received power per path (RSRPP);
a delay;
a relative delay;
an angle of arrival (AoA);
a doppler shift;
a delay spread;
a reference signal time difference (RSTD);
a receive-transmit time difference with respect to the WTRU;
a reference signal carrier phase (RSCP);
a reference signal carrier phase difference (RSCPD);
a radar cross section (RCS);
a micro-doppler measurement; or
a channel impulse response (CIR).

9. The method of any one of claims 1-8, wherein the RS corresponds to any one or more of:
a positioning reference signal (PRS);
a downlink-PRS (DL-PRS);
a downlink-RS (DL-RS);
a sidelink-PRS (SL-PRS);
a sounding RS (SRS); or
an SRS for positioning (SRSp).

10. The method of any one of claims 1-9, further comprising:
reporting at least one of the sensing configuration or a second LoS status between the WTRU and a transmit/receive point (TRP) to the wireless network.

11. A wireless transmit/receive unit (WTRU) comprising processing circuitry and communication circuitry, the WTRU configured to:
receive, from a wireless network, sensing configuration information;
receive a reference signal (RS), from the wireless network, associated with a sensing target (ST);
perform one or more measurements based on the RS and based on the sensing configuration information;
determine, based on the one or more measurements, a line of sight (LoS) status between the ST and the WTRU;
perform a sensing operation based on a sensing configuration to generate one or more sensing values, wherein the sensing configuration is selected based on the LoS status; and
report, to the wireless network, the one or more sensing values and the LoS status.

12. The WTRU of claim 11, wherein the LoS status comprises a first LoS status, the WTRU further configured to:
determine a second LoS status between the ST and a transmit/receive point (TRP), wherein:
if the first LoS status indicates an LoS between the WTRU and the ST and when the second LoS status indicates an LoS between the TRP and the ST, configuring the WTRU for a bistatic sensing mode, and
if the first LoS status indicates the LoS between the WTRU and the ST and when the second LoS status indicates no LoS between the TRP and the ST, configuring the WTRU for a monostatic sensing mode.

13. The WTRU of any one of claims 11-12, wherein, when determining the LoS status, the WTRU is configured to:
determine that at least one measurement of the one or more measurements exceeds a threshold, wherein the one or more measurements comprise any one or more of:
a reference signal received power (RSRP);
a reference signal received power per path (RSRPP);
a delay;
a relative delay;
an angle of arrival (AoA);
a doppler shift;
a delay spread;
a reference signal time difference (RSTD);
a receive-transmit time difference with respect to the WTRU;
a reference signal carrier phase (RSCP);
a reference signal carrier phase difference (RSCPD); or
a micro-doppler measurement;
determine whether the at least one measurement exceeds the threshold; and
based on determining whether the at least one measurement exceeds the threshold, determine that the LoS status is one of an LoS or a non-LoS.

14. The WTRU of any one of claims 11-13, wherein, when determining the LoS status, the WTRU is configured to:
receive, from the wireless network, one or more expected LoS measurements and one or more thresholds;
determine whether a difference between the one or more expected LoS measurements and the one or more measurements exceeds at least one threshold of the one or more thresholds; and
based on determining whether the difference exceeds the at least one threshold, determine that the LoS status is one of an LoS or a non-LoS.

15. The WTRU of any one of claims 11-14, wherein, when determining the LoS status, the WTRU is configured to any one or more of:
receive an indication from the wireless network to determine the LoS status;
determine that at least one measurement of the one or more measurements exceeds a first threshold;
determine that one or more WTRU-related parameters exceeds a second threshold;
determine that one or more sensing configuration parameters exceeds a third threshold; or
determine that the WTRU failed to decode at least one transmission from the wireless network.

16. The WTRU of claim 15, wherein the one or more WTRU-related parameters comprise any one or more of:
a change in location;
a change in orientation;
a change in velocity;
an error in an estimated location;
an error in an estimated velocity;
an indication of whether there is an LoS between the WTRU and a transmit/receive point (TRP);
a number of WTRU antenna elements; or
an indication of whether the WTRU has beamforming capabilities.

17. The WTRU of any one of claims 11-16, wherein the one or more sensing configuration parameters comprise any one or more of:
a sensing bandwidth;
a number of symbols in a time domain;
a density of reference signals;
a number of samples per measurement;
a reporting periodicity; or
a reporting quantity.

18. The WTRU of any one of claims 11-17, wherein the one or more sensing values comprise any one or more of:
a reference signal received power (RSRP);
a reference signal received power per path (RSRPP);
a delay;
a relative delay;
an angle of arrival (AoA);
a doppler shift;
a delay spread;
a reference signal time difference (RSTD);
a receive-transmit time difference with respect to the WTRU;
a reference signal carrier phase (RSCP);
a reference signal carrier phase difference (RSCPD);
a radar cross section (RCS);
a micro-doppler measurement; or
a channel impulse response (CIR).

19. The WTRU of any one of claims 11-18, wherein the RS corresponds to any one or more of:
a positioning reference signal (PRS);
a downlink-PRS (DL-PRS);
a downlink-RS (DL-RS);
a sidelink-PRS (SL-PRS);
a sounding RS (SRS); or
an SRS for positioning (SRSp).

20. The WTRU of any one of claims 11-19, further configured to:
report at least one of the sensing configuration or a second LoS status between the WTRU and a transmit/receive point (TRP) to the wireless network
